# EUROPEAN PATENT APPLICATION

(11) **EP 4 600 474 A1**
(43) Date of publication of application: **13.08.2025**
(21) Application number: 23874472.6
(22) Date of filing: 30.05.2023
(51) Int. Cl.: F02C 6/16, F25B 7/00

(54) **COMPRESSED AIR ENERGY STORAGE DEVICE AND HEAT PUMP DEVICE**

(30) Priority: 05.10.2022 JP 2022161195
(71) Applicant: Hitachi Industrial Equipment Systems Co., Ltd., Tokyo 101-0021 (JP)
(72) Inventor: KOYAMA, Masaki, Tokyo 100-8280 (JP); CHIBA, Kotaro, Tokyo 100-8280 (JP); NAGATA, Shuhei, Tokyo 100-8280 (JP)
(74) Representative: MERH-IP Matias Erny Reichl Hoffmann Patentanwälte PartG mbB
(86) International application number: PCT/JP2023/020095
(87) International publication number: WO 2024/075336

(57) **Abstract**

A compressed air energy storage apparatus includes a compressor that is driven by an electric motor and compresses air, a first heat exchanger that heats a heat storage medium by way of a heat exchange with compressed air compressed by the compressor, a pressure storage tank that stores compressed air having exchanged heat in the heat exchanger, an expander driven by the compressed air stored in the pressure storage tank, an electric generator driven by the expander, a second heat exchanger that heats compressed air flowing into the expander, by way of a heat exchange with a heat storage medium heated by the first heat exchanger, and a heat pump device that absorbs heat from a heat storage medium having exchanged heat in the second heat exchanger and radiates heat into compressed air that drives the expander.

## Description

### Technical Field

The present invention relates to a compressed air energy storage apparatus and a heat pump device.

### Background Art

Electric power generation using renewable energy sources, such as wind power generation and solar power generation tends to be fluctuated in power generation amount because it depends on weather conditions. As a countermeasure against such a fluctuation, there has been known a compressed air energy storage (CAES) system as a system for leveling generated electric power fluctuations. In a compressed air energy storage apparatus (CAES apparatus) using such an CAES system, electric energy is stored, as compressed air, in a pressure accumulating tank, and, when electric power is required, the compressed air is used to drive an expander to operate an electric generator, thereby generating electric energy to level its output power.

Regarding the CAES apparatus, a system has been known in which, in order to increase electric power generation efficiency, compression heat is recovered into a heat storage medium to be stored in a heat storage tank or the like, and the compressed air before being expanded is heated with the recovered compression heat. The system is effective to reduce heat radiation from the heat storage medium in the heat storage tank, and increase motive power recovered from the compressed air when it is expanded. The CAES apparatus is required to have a high ratio (electric power recovery efficiency) of output energy for driving the expander to generate electric power to input energy for generating the compressed air. To meet the requirement, it is important to focus on the recovery of compression heat, i.e., how much of the stored compression heat can be used to heat the compressed air that drives the expander. Generally, the temperature of air attained when atmospheric air at 20°C is compressed to approximately 1.0Mpa is approximately 240°C, and its effective energy is small for recovering heat according to a heat exchange via the heat storage medium and so is the recovered heat.

As a CAES apparatus that performs such heat recovery, Patent Document 1 discloses a compressed air storage electricity generation apparatus, for example. It is stated in Patent Document 1 that the compressed air storage electricity generation apparatus heats compressed air before being expanded not only with a heat storage medium, but also with external waste heat to increase the electricity generation efficiency of the CAES apparatus.

### Prior Art Document

### Patent Document

Patent Document 1: Japanese patent No. 6649141

### Summary of the Invention

### Problem to be Solved by the Invention

However, the apparatus disclosed in Patent Document 1 increases the electricity generation efficiency of the CAES apparatus by using external waste heat. Therefore, unless there is an appropriate external heat source, the electricity generation efficiency cannot be increased, and the electric power recovery efficiency that represents the ratio of output electric power to input electric power cannot be increased.

### Means for Solving the Problem

A compressed air energy storage apparatus according to an aspect of the present invention includes a compressor that is driven by an electric motor and compresses air, a first heat exchanger that heats a heat storage medium by way of a heat exchange with compressed air compressed by the compressor, a pressure storage tank that stores compressed air having exchanged heat in the heat exchanger, an expander driven by the compressed air stored in the pressure storage tank, an electric generator driven by the expander, a second heat exchanger for heating compressed air flowing into the expander, by way of a heat exchange with a heat storage medium heated by the first heat exchanger, and a heat pump device that absorbs heat from a heat storage medium having exchanged heat in the second heat exchanger and radiates heat into compressed air that drives the expander.

### Advantages of the invention

According to the present invention, the electricity recovery efficiency can be increased by efficiently recovering compression heat in a CAES apparatus.

### Brief Description of the Drawings

FIG. 1 is a diagram illustrating a general configuration of a compressed air energy storage apparatus according to a first embodiment of the present invention.
FIG. 2 is a diagram illustrating a comparative example with respect to the compressed air energy storage apparatus according to the first embodiment.
FIG. 3 is a diagram illustrating a general configuration of a compressed air energy storage apparatus according to a second embodiment of the present invention.
FIG. 4 is a diagram illustrating a general configuration of a compressed air energy storage apparatus according to a third embodiment of the present invention.
FIG. 5 is a diagram illustrating a general configuration of a compressed air energy storage apparatus according to a fourth embodiment of the present invention.
FIG. 6 is a diagram illustrating a general configuration of a compressed air energy storage apparatus according to a fifth embodiment of the present invention.
FIG. 7 is a diagram illustrating a general configuration of a compressed air energy storage apparatus according to a sixth embodiment of the present invention.
FIG. 8 is a diagram illustrating a general configuration of a compressed air energy storage apparatus according to a seventh embodiment of the present invention.
FIG. 9 is a diagram illustrating a general configuration of a compressed air energy storage apparatus according to an eighth embodiment of the present invention.
FIG. 10 is a diagram illustrating a general configuration of a compressed air energy storage apparatus according to a ninth embodiment of the present invention.
FIG. 11 is a diagram illustrating an example of a general configuration of a single-stage compressed air energy storage apparatus.

### Modes for Carrying Out the Invention

Modes for carrying out the present invention will be described hereinbelow with reference to the drawings. The description that follows and the drawings are given as an illustrative example for explaining the present invention, and include appropriate omissions and simplifications for the purpose of providing a clearer explanation. In addition, identical or similar constituent elements and processing details are denoted by identical reference characters, and may be omitted from redundant description in some cases. The contents described below are merely illustrative of examples of embodiments of the present invention, and the present invention is not limited to the embodiments described below, but may be reduced to practice in various other embodiments.

### (First embodiment)

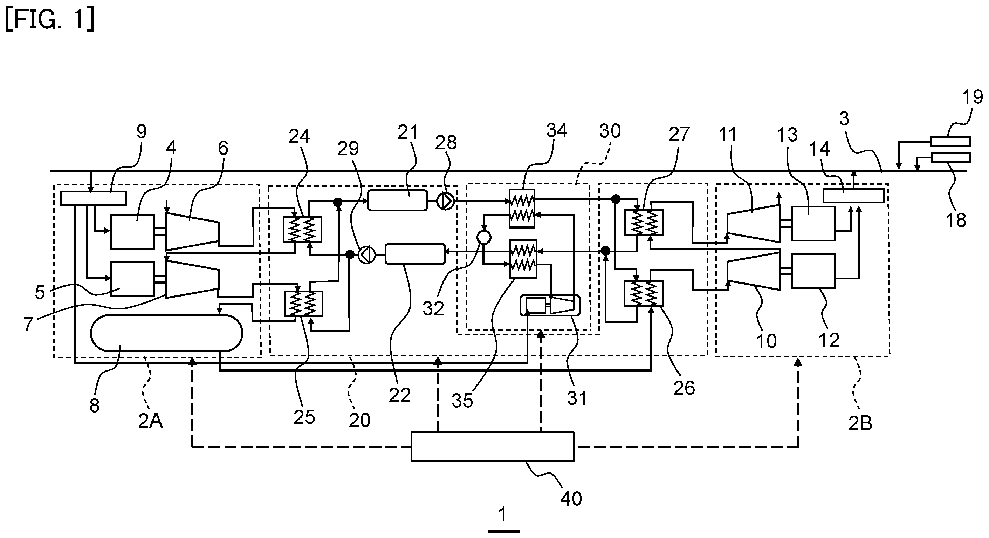

FIG. 1 is a diagram illustrating a general configuration of a compressed air energy storage apparatus (CAES apparatus) according to a first embodiment of the present invention. A CAES apparatus 1 includes a compressor unit 2A, an expander unit 2B, a heat storage unit 20, a heat pump unit 30, and a controller 40. The compressor unit 2A, the expander unit 2B, the heat storage unit 20, and the heat pump unit 30 are controlled in operation by the controller 40.

The controller 40 includes a computer including a processing device such as a CPU (central processing unit), an MPU (Micro Processing unit), or a DSP (digital signal processor), a nonvolatile memory such as a ROM (Read Only Memory), a flash memory, or a hard disk drive, a volatile member such as a RAM (Random Access Memory), input and output interfaces, and other peripheral circuits. These pieces of hardware cooperate with each other in executing software to realize a plurality of functions. The controller 40 may include a single computer or a plurality of computers. The processing device may alternatively be an ASIC (Application Specific Integrated Circuit) or an FPGA (Field Programmable Gate Array), for example.

The nonvolatile memory stores programs capable of executing various arithmetic operations. Specifically, the nonvolatile memory is a storage medium (storage device) capable of reading programs for realizing the functions according to the present embodiment. The volatile memory is a storage medium (storage device) for temporarily storing the results of arithmetic operations carried out by the processing device and signals input from the input interface. The processing device is a device for executing arithmetic operations by decompressing the programs stored in the nonvolatile memory into the volatile memory, and performs predetermined arithmetic operations on data read from the input and output interfaces, the nonvolatile memory, and the volatile memory according to the programs.

The compressor unit 2A includes motors (electric motors) 4 and 5, compressors 6 and 7, a pressure storage tank 8, and an inverter device 9. The expander unit 2B includes expanders 10 and 11, electric generators 12 and 13, and a power conditioner 14. The compressors 6 and 7 and the expanders 10 and 11 may be of any of the screw type, the scroll type, the turbo type, and the reciprocating type. The heat storage unit 20 is a system in which a heat storage medium such as water circulates, and includes heat storage tanks 21 and 22, heat exchangers 24 through 27, and transfer pumps 28 and 29. The heat pump unit 30 is a heat pump device incorporating a steam compression cycle that uses a refrigerant, and includes a refrigerant compressor 31, an expansion valve 32, a heat radiator 34, and an evaporator 35.

The CAES apparatus 1 is connected to a grid power system 3 including a solar power generation apparatus 18 and a wind power generation apparatus 19. The inverter device 9 of the compressor unit 2A drives the motors 4 and 5 with electric power supplied from the grid power system 3. Electric power generated by the electric generators 12 and 13 is supplied via the power conditioner 14 to the grid power system 3.

The compressor 6 that is in charge of a first-stage compression process is rotationally driven by the motor 4. The compressor 7 that is in charge of a second-stage compression process is rotationally driven by the motor 5. These compressors 6 and 7 perform two-stage compression on air. The compressor 6 has an inlet port that is open into the atmosphere and an outlet port that is connected through the heat exchanger 24 of the heat storage unit 20 to an inlet port of the second-stage compressor 7. The compressor 7 has an outlet port connected through the heat exchanger 25 of the heat storage unit 20 to the pressure storage tank 8.

In the expander unit 2B, on the other hand, the expander 10 that is in charge of a first-stage expansion process has an inlet port connected to the pressure storage tank 8 through the heat exchanger 26 of the heat storage unit 20. The expander 10 has an outlet port connected to an inlet port of the expander 11, which is in charge of a second-stage expansion process, through the heat exchanger 27 of the heat storage unit 20. These expanders 10 and 11 perform two-stage expansion on compressed air. The electric generator 12 is driven by the expander 10, and the electric generator 13 is driven by the expander 11, thereby generating electricity (regenerating electric power). The electric generators 12 and 13 are connected through the power conditioner 14 to the grid power system 3, returning regenerated electric power to the grid power system 3.

The heat storage unit 20 includes a heat storage medium route for sending the heat storage medium from the heat storage tank 22 through the heat exchangers 24 and 25, which are connected parallel to each other, into the heat storage tank 21, and a heat storage medium route for sending the heat storage medium from the heat storage tank 21 through the heat exchangers 26 and 27, which are connected parallel to each other, into the heat storage tank 22. The heat storage medium is transferred from the heat storage tanks 21 and 22 by the transfer pumps 28 and 29. The heat radiator 34 of the heat pump unit 30 is connected to the heat storage medium route between the heat storage tank 21 and the heat exchangers 26 and 27. The evaporator 35 of the heat pump unit 30 is connected to the heat storage medium route between the heat exchangers 26 and 27 and the heat storage tank 22.

The heat pump unit 30 provides a refrigeration cycle in which the refrigerant is compressed by the refrigerant compressor 31 to radiate heat in the heat radiator 34, and then, the refrigerant is decompressed by the expansion valve 32 to absorb heat in the evaporator 35 and thereafter, the refrigerant is returned to the refrigerant compressor 31. The refrigerant compressor 31 that incorporates a motor is driven by input electric power from the grid power system 3. As described above, the heat radiator 34 is connected to the heat storage medium route between the heat storage tank 21 and the heat exchangers 26 and 27, so that the heat of the refrigerant is radiated into the heat storage medium in the heat radiator 34. The evaporator 35 is connected to the heat storage medium route, which returns the heat storage medium from the heat exchangers 26 and 27 to the heat storage tank 22, so that the heat of the heat storage medium is absorbed into the refrigerant in the evaporator 35.

Now, operation of the CAES apparatus 1 will be described below. The heat storage medium may include water, pressurized water, mineral-oil-base medium, or glycol-base medium, for example. However, a case using water as the heat storage medium will be described below by way of example.

### (Charging operation)

First, a charging operation for generating and storing compressed air will be described below. In the charging operation, the controller 40 makes the motors 4 and 5 and the transfer pump 29 operate. When the transfer pump 29 operates, the heat storage medium stored in the heat storage tank 22 on a low-temperature side is supplied to the heat exchangers 24 and 25. As described above, the motor 4 drives the compressor 6 and the motor 5 drives the compressor 7, whereby the atmospheric air sucked into the compressor 6 through its inlet port is compressed through two stages and discharged from the compressor 7 through its outlet port. The high-temperature compressed air that has been adiabatically compressed by the compressor 6 flows into the heat exchanger 24, where the compressed air exchanges heat with the heat storage medium supplied from the heat storage tank 22 disposed on the low-temperature side. The heat exchange makes the low-temperature heat storage medium higher in temperature to approximately 100°C, and then, the heat storage medium is stored in the heat storage tank 21 on a high-temperature side.

The compressed air that has exchanged heat in the heat exchanger 24 has its temperature lowered to an approximately normal temperature and is then sucked into the compressor 7 provided downstream of the heat exchanger 24. The normal-temperature compressed air sucked into the compressor 7 is adiabatically compressed in the second stage by the compressor 7, turning itself into high-temperature higher-pressure compressed air. The compressed air discharged from the compressor 7 is introduced into the heat exchanger 25, where the compressed air exchanges heat with the heat storage medium supplied from the heat storage tank 22 disposed on the low-temperature side. The heat exchange makes the low-temperature heat storage medium higher in temperature to approximately 100°C, and then, the heat storage medium is stored in the heat storage tank 21 on the high-temperature side. The compressed air that has exchanged heat in the heat exchanger 25 has its temperature lowered to an approximately normal temperature and is stored in the pressure storage tank 8. By the above operation, compressed air energy storage in the charging operation is performed.

### (Discharging operation)

Next, a discharging operation for driving the electric generators with the compressed air to generate electricity will be described below. In the discharging operation, the controller 40 makes the transfer pump 28 and the heat pump unit 30 operate and makes the low-temperature high-pressure compressed air stored in the pressure storage tank 8 be supplied to the heat exchanger 26. When the transfer pump 28 is operated, the heat storage medium stored in the heat storage tank 21 on the high-temperature side is supplied to the heat exchangers 26 and 27 through the heat radiator 34 of the heat pump unit 30. The temperature of the heat storage medium that flows from the heat storage tank 21 into the heat radiator 34 is in the range of approximately 70°C to 90°C, depending on the period of time during which it is stored in the heat storage tank 21. In addition, the temperature of the refrigerant flowing into the heat radiator 34 is approximately 120°C. When the heat storage medium passes through the heat radiator 34, the temperature of the heat storage medium becomes approximately 100°C by way of a heat exchange with the refrigerant.

The compressed air that has flowed into the heat exchanger 26 has its temperature increased to a high temperature of approximately 90°C by way of a heat exchange with the high-temperature heat storage medium. The compressed air that has been heated to approximately 90°C in the heat exchanger 26 is supplied to the expander 10, driving the expander 10 to perform first-stage adiabatic expansion on the compressed air. The air that has been adiabatically expanded by the expander 10 flows into the heat exchanger 27 that is provided between the outlet port of the expander 10 and the inlet port of the expander 11. The heat storage medium at approximately 100°C that has flowed into the heat exchanger 26 has its temperature lowered to approximately 40°C by way of a heat exchange with the compressed air, and then, flows into the evaporator 35 of the heat pump unit 30.

The heat storage medium at approximately 100°C that has been heated by the heat radiator 34 of the heat pump unit 30 is also supplied to the heat exchanger 27 connected to the inlet port of the expander 11. The air that has been adiabatically expanded by the expander 10 flows into the heat exchanger 27, where its temperature rises to a high temperature of approximately 90°C by way of a heat exchange with the high-temperature heat storage medium. The air heated to approximately 90°C by the heat exchanger 27 is sucked into the expander 11, where second-stage adiabatic expansion is performed on the air. The air that has been adiabatically expanded by the expander 11 becomes a state of low-temperature low-pressure and is then discharged into the atmosphere from an outlet port of the expander 11. Thus, heating the low-temperature high-pressure compressed air stored in the pressure storage tank 8 with the heat storage medium stored in the heat storage tank 21, and driving the expanders 10 and 11 with the heated compressed air, thereby electric power is generated by the electric generators 12 and 13. The generated electric power is supplied via the power conditioner 14 to the grid power system 3.

The heat storage medium at approximately 100°C that has flowed into the heat exchanger 27 has its temperature lowered to approximately 40°C by way of a heat exchange, and flows out of the heat exchanger 27. The low-temperature heat storage medium that has flowed out of the heat exchanger 27 joins the heat storage medium that has flowed out of the heat exchanger 26, after which the combined heat storage medium flows into the evaporator 35 of the heat pump unit 30. In the evaporator 35, a heat exchange is performed between the heat storage medium at the low temperature (approximately 40°C) flowing from the heat exchangers 26 and 27 and the refrigerant whose temperature has dropped (to approximately 20°C) by being decompressed by the expansion valve 32. The heat storage medium whose temperature has been reduced to approximately 20°C by the heat exchange in the evaporator 35 flows into the heat storage tank 22 and is stored therein. Meanwhile, the refrigerant is evaporated by absorbing heat from the heat storage medium in the evaporator 35 and returns to the refrigerant compressor 31.

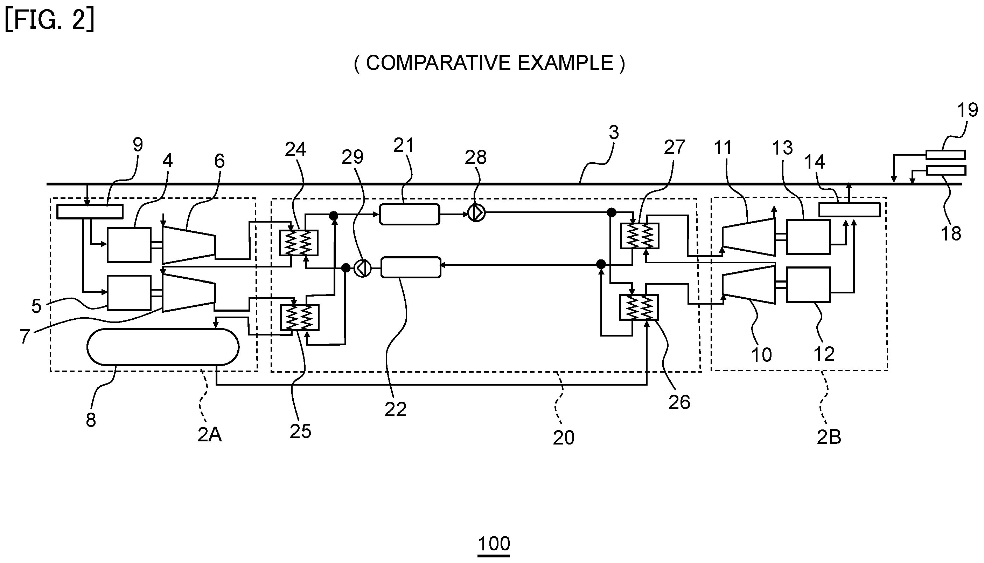

Next, increasing the electric power recovery efficiency according to the present embodiment will be described below. FIG. 2 is a diagram illustrating a comparative example with respect to the compressed air energy storage apparatus 1 according to the present embodiment. A compressed air energy storage apparatus 100 according the comparative example illustrated in FIG. 2 is free of the heat pump unit 30 and has other configurations similar to those illustrated in FIG. 1.

In the CAES apparatus 100, the heat storage medium stored in the heat storage tank 21 is not heated as is the case with the configuration illustrated in FIG. 1, but is supplied as it is to the heat exchangers 26 and 27. As described above, even though the temperature of the heat storage medium flowing into the heat storage tank 21 is approximately 100°C, the temperature of the heat storage medium supplied from the heat storage tank 21 to the heat exchangers 26 and 27 is in the range of approximately 70 to 90°C due to heat dissipation while the heat storage medium is being stored in the heat storage tank 21. Therefore, the temperature of the compressed air flowing out of the heat exchangers 26 and 27 after it has exchanged heat with the heat storage medium is approximately 70°C. It is assumed here that the electric power input to the inverter 9 depicted in Fig. 2 in the charging operation is indicated by E1 and the regenerated electric power generated by compressed air generated by the electric power E1 is indicated by E2. In this case, the electric power recovery efficiency is represented by E2/E1, which is of a value smaller than 1.

On the other hand, according to the present embodiment illustrated in FIG. 1, heat energy is absorbed from the heat storage medium on the low-temperature side, which returns from the heat exchangers 26 and 27 to the heat storage tank 22, and discharged into the heat storage medium on the high-temperature side, which is supplied from the heat storage tank 21 to the heat exchangers 26 and 27. Consequently, the temperature of the heat storage medium supplied to the heat exchangers 26 and 27 is approximately 100°C. Accordingly, the temperature of the compressed air flowing into the expanders 10 and 11 rises to approximately 90°C, so that the regenerated electric power generated by the electric generators 12 and 13 is larger than that with the configuration illustrated in FIG. 2.

According to the configuration illustrated in FIG. 1, since electric power ΔE1 is required to drive the refrigerant compressor 31 of the heat pump unit 30 in addition to the electric power E1 for generating the compressed air, the electric power input to the inverter device 9 is "E1 + ΔE1." Moreover, since the temperature of the compressed air for driving the expanders 10 and 11 is approximately 90°C in the configuration illustrated in FIG. 1, which is higher than approximately 70°C in the configuration illustrated in FIG. 2, the regenerated electric power generated by the electric generators 12 and 13 is of a value "E2 + ΔE2" that is larger than E2. Therefore, the electric power recovery efficiency in this case is represented by (E2 + ΔE2)/(E1 + ΔE1).

In order for the electric power recovery efficiency = (E2 + ΔE2)/(E1 + ΔE1) to be larger than the electric power generation = E2/E1 in the configuration illustrated in FIG. 2, i.e., in order to satisfy [(E2 + ΔE2)/(E1 + ΔE1)] > (E2/E1), it is necessary to fulfil the condition "(ΔE2/ΔE1) > (E2/E1) ··· (1)." As the COP (coefficient of performance) of the refrigeration cycle of the heat pump unit 30 is of approximately 3.0, it is possible to charge the energy that is approximately three times the electric power for driving the refrigerant compressor 31 into the heat storage medium. Consequently, the effective energy of the heat storage medium is increased, satisfying the above conditional equation (1).

As described above, according to the first embodiment, as illustrated in FIG. 1, the heat pump unit 30 is provided to absorb heat from the heat storage medium on the low-temperature side and radiate the heat into the heat storage medium on the high-temperature side, thereby efficiently recovering the compression heat stored in the heat storage medium and transferring the recovered heat to the compressed air to be expanded. As a result, the temperature of the compressed air supplied to the expanders 10 and 11 can be made higher (to approximately 90°C) to increase the electric power recovery efficiency.

In a case of the CAES apparatus 100 being free of the heat pump unit 30 as the comparative example illustrated in FIG. 2, the compressed air supplied to the expanders 10 and 11 is heated to approximately 70°C by way of a heat exchange with the heat storage medium at a temperature in the range of 70 to 90°C. In contrast, according to the present embodiment, the compressed air is heated to approximately 90°C by way of a heat exchange with the heat storage medium at approximately 100°C. In this case, the rate at which the temperature of the compressed air flowing out of the heat exchangers 26 and 27 rises is higher if the temperature of the heat storage medium is higher. Therefore, when the discharging operation is started, the heat storage medium starts to be supplied to warm the heat exchangers 26 and 27, so that the timing to cause the temperature of the compressed air supplied to the expanders 10 and 11 to reach approximately 70°C in the case of FIG. 2, or stated otherwise, the timing to cause the amount of generated electric power to reach the same value as the amount of generated electric power in the case of FIG. 2, is earlier than that with the case of FIG. 2. In other words, the responsiveness to electric power demand fluctuations is increased.

### (Second embodiment)

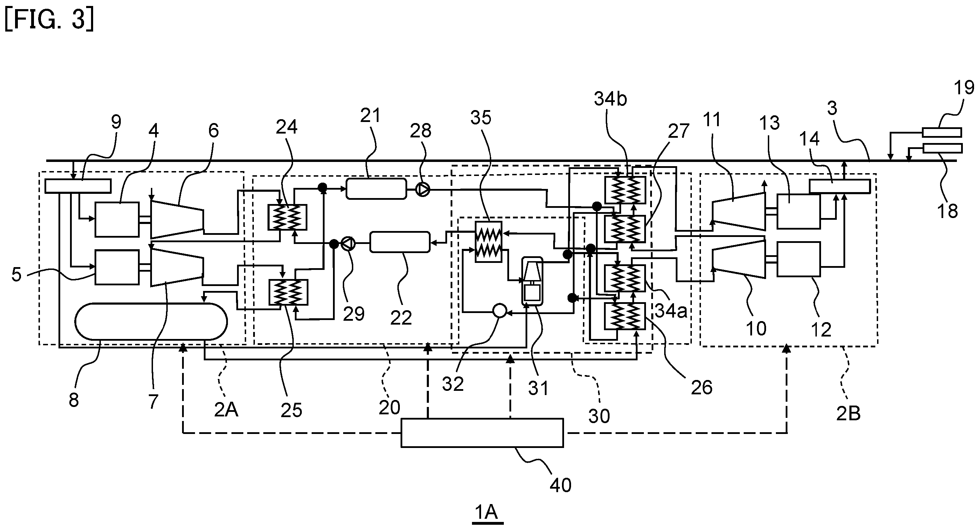

FIG. 3 is a diagram illustrating a general configuration of a compressed air energy storage apparatus (CAES apparatus) according to a second embodiment of the present invention. Those constituent elements that are similar to those according to the first embodiment are denoted by identical reference characters and their redundant description will be omitted below.

A CAES apparatus 1A according to the second embodiment illustrated in FIG. 2 includes a heat pump unit 30 including a refrigerant compressor 31, an expansion valve 32, two heat radiators 34a and 34b, and an evaporator 35. The heat radiator 34a is connected to a compressed air route between the heat exchanger 26 and the expander 10. The heat radiator 34b is connected to a compressed air route between the heat exchanger 27 and the expander 11. As is the case with FIG. 1, the evaporator 35 is connected to a heat storage medium route on the low-temperature-side between the heat exchangers 26 and 27 and the heat storage tank 22.

The heat pump unit 30 provides a refrigeration cycle in which the refrigerant compressed by the refrigerant compressor 31 is divided into the two flows to heat radiators 34a and 34b, where the refrigerant radiates heat, thereafter the divided refrigerant flows are joined together, then the refrigerant is reduced in pressure by the expansion valve 32, and flows into the evaporator 35, where the refrigerant absorbs heat, after which the refrigerant flows back to the refrigerant compressor 31. According to the second embodiment, the temperature of the refrigerant flowing into the heat radiators 34a and 34b is set to approximately 130°C. Other configurations are the same as those of the CAES apparatus 1 illustrated in FIG. 1.

Next, operation of the CAES apparatus 1A will be described below. The heat storage medium may include water, pressurized water, mineral-oil-base medium, or glycol-base medium, for example. However, a case where water is used as the heat storage medium will be described below by way of example. A charging operation in the CAES apparatus 1A, of the charging operation and a discharging operation in the CAES apparatus 1A, is the same as the charging operation in the CAES apparatus 1. Therefore, the discharging operation in the CAES apparatus 1A will be described below.

### (Discharging operation)

In the discharging operation, the controller 40 operates the transfer pump 28 and the heat pump unit 30, and supplies the low-temperature high-pressure compressed air stored in the pressure storage tank 8 to the heat exchanger 26. When the transfer pump 28 is operated, it supplies the heat storage medium stored in the heat storage tank 21 on the high-temperature side to the heat exchangers 26 and 27. The temperature of the heat storage medium that is supplied from the heat storage tank 21 to the heat exchangers 26 and 27 is in the range of approximately 70°C to 90°C. The low-temperature high-pressure compressed air supplied from the pressure storage tank 8 to the heat exchanger 26 has its temperature increased to approximately 70°C by way of a heat exchange with the heat storage medium in the heat exchanger 26. After the heat exchange in the heat exchanger 26, the heat storage medium has its temperature changed to approximately 40°C and flows into the evaporator 35 of the heat pump unit 30.

The compressed air that has passed through the heat exchanger 26 flows into the heat radiator 34a, and has its temperature further increased by way of a heat exchange with the high-temperature refrigerant. As described above, since the temperature of the refrigerant flowing into the heat radiator 34a is set to approximately 130°C, the temperature of the compressed air flowing into the expander 10 rises to approximately 120°C by way of a heat exchange with the refrigerant. The temperature of the refrigerant that flows out of the heat radiator 34a drops to approximately 80°C by way of a heat exchange with the compressed air. The refrigerant at approximately 80°C that flows out of the heat radiator 34a goes back to the expansion valve 32.

The compressed air at approximately 120°C that has flowed into the first-stage expander 10 drives the expander 10 by performing first-stage adiabatic expansion in the expander 10. The compressed air that has dropped in pressure and temperature due to the adiabatic expansion flows into the heat exchanger 27, where the temperature of the compressed air rises to approximately 70°C by way of a heat exchange with the heat storage medium. Meanwhile, the temperature of the heat storage medium after the heat exchange in the heat exchanger 27 becomes approximately 40°C. After having joined the heat storage medium from the heat exchanger 26, the heat storage medium from the heat exchanger 27 flows into the evaporator 35 of the heat pump unit 30.

The compressed air that has passed through the heat exchanger 27 flows into the heat radiator 34b and has its temperature further increased by way of a heat exchange with the high-temperature heat storage medium. As described above, since the temperature of the refrigerant flowing into the heat radiator 34b is set to approximately 130°C, the temperature of the compressed air flowing into the expander 10 rises to approximately 120°C by way of a heat exchange with the refrigerant. The compressed air at approximately 120°C that has flowed into the second-stage expander 11 drives the expander 11 by performing second-stage adiabatic expansion in the expander 11. The air that has been adiabatically expanded by the expander 11 becomes low in temperature and pressure and is vented to the atmosphere from the outlet port of the expander 11. By thus driving the expanders 10 and 11 with the compressed air heated by the heat radiators 34a and 34b, electric power is generated by the electric generators 12 and 13 and supplied via the power conditioner 14 to the grid power system 3.

In the heat pump unit 30, the refrigerant that flows out of the heat radiator 34b has its temperature dropped to approximately 80°C due to a heat exchange with the compressed air, and flows back to the expansion valve 32 after having joined the refrigerant that has flowed out of the heat radiator 34a. The refrigerant at approximately 80°C that has flowed out of the heat radiators 34a and 34b has its temperature dropped to approximately 20°C by being expanded by the expansion valve 32, and then flows into the evaporator 35. In the evaporator 35, the refrigerant at approximately 20°C is evaporated by way of a heat exchange with the heat storage medium at approximately 40°C flowing from the heat exchangers 26 and 27. The refrigerant evaporated by absorbing heat from the heat storage medium increases in its temperature by being compressed by the refrigerant compressor 31, and radiates heat into the compressed air in the heat radiators 34a and 34b. As a result, the compressed air is heated to increase in its temperature from approximately 70°C to approximately 120°C, as described above.

According to the first embodiment described above, the heat of the heat storage medium on the low-temperature side is transferred to the heat storage medium on the high-temperature side, and the heat storage medium on the high-temperature side heats the compressed air. In a case of water being used as the heat storage medium, its temperature can only be increased to approximately 100°C, thus the compressed air can only be heated to approximately 100°C.

In contrast, according to the second embodiment, heat absorbed from the heat storage medium on the low-temperature side is directly radiated into the compressed air by the heat radiators 34a and 34b through which the refrigerant flows. Therefore, the compressed air that flows into the expanders 10 and 11 is heated by the heat radiators 34a and 34b to approximately 120°C that is higher than the temperature of the compressed air in the first embodiment. In other words, the heat efficiency is increased as compared with the configuration illustrated in FIG. 1 where the heat energy recovered by the heat pump unit 30 is radiated into the compressed air through the heat storage medium, making it possible to heat the compressed air flowing into the expanders 10 and 11 to a higher temperature to increase the electric power recovery efficiency due to an increase in the generated electric power. According to the second embodiment, moreover, since the temperature to which the compressed air is heated by the heat radiators 34a and 34b is made higher, the temperature of the compressed air to be expanded rises quickly, resulting in an increase in the responsiveness to electric power demand fluctuations.

### (Third embodiment)

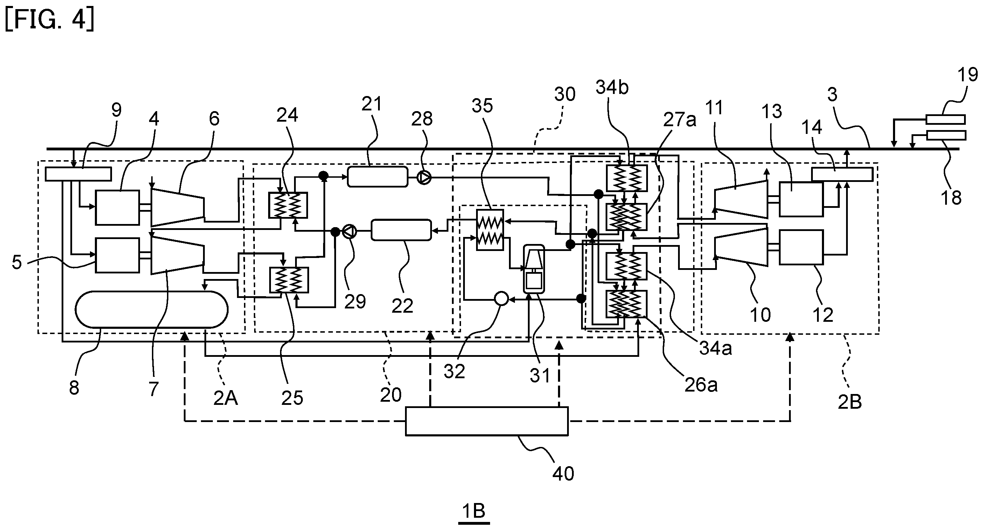

FIG. 4 is a diagram illustrating a general configuration of a compressed air energy storage apparatus (CAES apparatus) according to a third embodiment of the present invention. A CAES apparatus 1B illustrated in FIG. 4 includes three-fluid heat exchangers 26a and 27a that replace the heat exchangers 26 and 27 in the configuration illustrated in FIG. 3. The refrigerant that has flowed out of the heat radiator 34a flows into the three-fluid heat exchanger 26a, and the refrigerant that has flowed out of the heat radiator 34b flows into the three-fluid heat exchanger 27a. Those components that are similar to those according to the second embodiment are denoted by identical reference characters and their redundant description will be omitted below.

The three-fluid heat exchangers 26a and 27a have, as a fluid route on a heat-radiation side, a fluid channel through which the heat storage medium flows and a fluid channel through which the refrigerant flows, and have, as a fluid route on a heat-absorption side, a fluid channel through which the compressed gas flows. In other words, the three-fluid heat exchangers 26a and 27a heat the compressed air as heat is transferred from the heat storage medium and the refrigerant to the compressed air. Therefore, the three-fluid heat exchangers 26a and 27a can be said to be elements of the heat storage unit 20 and also elements of the heat pump unit 30. Other configurations are similar to those illustrated in FIG. 3. The heat storage medium may include water, pressurized water, mineral-oil-base medium, or glycol-base medium, for example. However, a case where water is used as the heat storage medium will be described below by way of example.

The refrigerant compressed by the refrigerant compressor 31 is divided into refrigerant flows that are introduced into the respective heat radiators 34a and 34b. The refrigerant that has exchanged heat with the compressed air in the heat radiator 34a flows into the three-fluid heat exchanger 26a, and the refrigerant that has exchanged heat with the compressed air in the heat radiator 34b flows into the three-fluid heat exchanger 27a. The refrigerant that has passed through the three-fluid heat exchanger 26a and the refrigerant that has passed through the three-fluid heat exchanger 27a join each other, after which the combined refrigerant has its temperature dropped by being adiabatically expanded by the expansion valve 32. The adiabatically expanded refrigerant is then evaporated by absorbing heat from the heat storage medium on the low-temperature side in the evaporator 35.

The refrigerant compressed by the refrigerant compressor 31 has a temperature of approximately 130°C. The temperature of the refrigerant drops to approximately 80°C as the refrigerant exchanges heat with the compressed air in the heat radiator 34a, and then becomes approximately 40°C as the refrigerant exchanges heat with the compressed air in the three-fluid heat exchanger 26a. The temperature of the refrigerant that has passed through the heat radiator 34b and the three-fluid heat exchanger 27a varies similarly, i.e., it is approximately 80°C at an outlet port of the heat radiator 34b and approximately 40°C at an outlet port of the three-fluid heat exchanger 27a. The temperatures of the heat storage medium at inlet and outlet ports of the three-fluid heat exchangers 26a and 27a are approximately 80°C (inlet port) and approximately 40°C (outlet port). The refrigerant at approximately 40°C that has flowed out of the three-fluid heat exchangers 26a and 27a has its temperature dropped by being adiabatically expanded in the expansion valve 32.

In the configuration illustrated in FIG. 3 according to the second embodiment described above, the temperature of the refrigerant flowing into the expansion valve 32 is approximately 80°C. In the configuration illustrated in FIG. 4, however, the temperature of the refrigerant flowing into the expansion valve 32 is lower than that, i.e., approximately 40°C. Therefore, the temperature of the refrigerant after it has been adiabatically expanded can be made lower, making it possible to increase the amount of heat absorbed (recovered) from the heat storage medium to the refrigerant in the evaporator 35. In other words, the electric power ΔE1 (see the conditional equation (1)) input to the refrigerant compressor 31 in a case of the heat radiators 34a and 34b heating the compressed air to approximately 120°C can further be reduced. As a result, the electric power recovery efficiency can further be increased. Moreover, as the temperature of the compressed air that flows into the expanders 10 and 11 can be made higher by further heating the compressed air with the heat radiators 34a and 34b, the rate at which the temperature of the compressed air rises becomes higher, resulting in an increase in the responsiveness to electric power demand fluctuations.

### (Fourth embodiment)

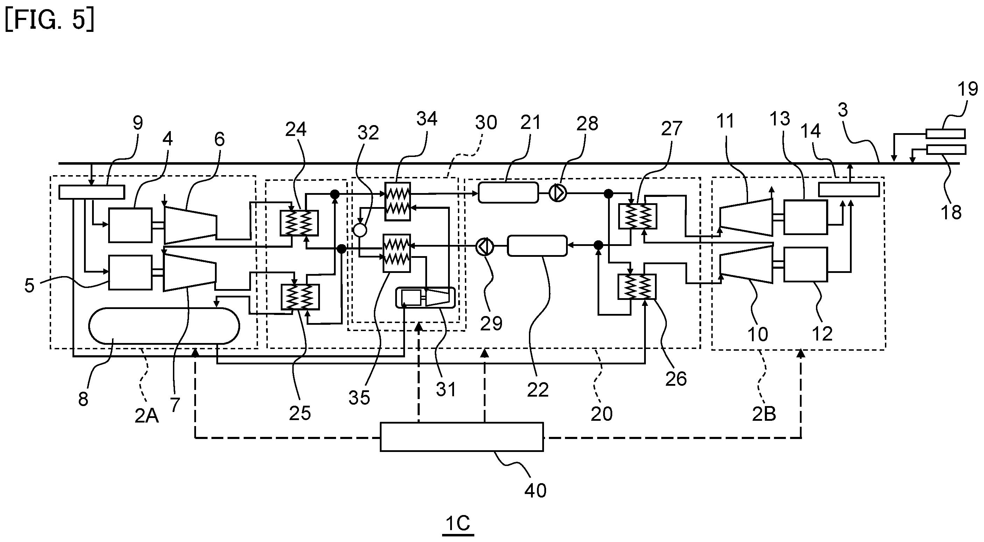

FIG. 5 is a diagram illustrating a general configuration of a compressed air energy storage apparatus (CAES apparatus) according to a fourth embodiment of the present invention. A CAES apparatus 1C illustrated in FIG. 5 includes a heat pump unit 30 disposed in a different position as compared with the CAES apparatus 1 illustrated in FIG. 1. Moreover, the CAES apparatus 1C uses a mineral-oil-base heat storage medium or a glycol-base heat storage medium or pressurized water because the heat storage medium may occasionally have a high temperature of approximately 100°C in the CAES apparatus 1C. Other configurations are the same as those of the CAES apparatus 1 illustrated in FIG. 1, and similar components are denoted by identical reference characters and their redundant description will be omitted below.

In the CAES apparatus 1C, the evaporator 35 of the heat pump unit 30 is disposed in the heat storage medium route on the low-temperature side between the heat storage tank 22 and the heat exchangers 24 and 25, and the heat radiator 34 is disposed in the heat storage medium route on the high-temperature side between the heat exchangers 24 and 25 and the heat storage tank 21. The low-temperature heat storage medium stored in the heat storage tank 22 passes through the evaporator 35 of the heat pump unit 30 and is then supplied to the heat exchangers 24 and 25 that are connected parallel to each other. The heat storage medium that has flowed out of the heat exchangers 24 and 25 passes through the heat radiator 34 of the heat pump unit 30 and is then stored in the heat storage tank 21.

Next, a charging operation and a discharging operation of the CAES apparatus 1C will be described below.

### (Charging operation)

In the charging operation, the controller 40 operates the motors 4 and 5, the heat pump unit 30, and the transfer pump 29. When the motors 4 and 5 operate, they cause the compressor 6 and the compressor 7 to perform two-stage compression on the atmospheric air. When the transfer pump 29 operates, it causes the heat storage medium at approximately 40°C stored in the heat storage tank 22 on the low-temperature side to flow into the evaporator 35 of the heat pump unit 30. The heat storage medium that has flowed out of the heat storage tank 22 has its heat absorbed into the refrigerant by the evaporator 35, lowering its temperature from approximately 40°C to approximately 20°C. The heat storage medium at approximately 20°C that has flowed out of the evaporator 35 is divided into flows that flow respectively into the heat exchangers 24 and 25.

The high-temperature compressed air that has been adiabatically expanded by the compressor 6 is discharged from its outlet port and flows into the heat exchanger 24, where the compressed air exchanges heat with the heat storage medium at approximately 20°C that is supplied to the heat exchanger 24. The heat exchange makes the temperature of the heat storage medium reach approximately 100°C. The compressed air that has exchanged heat in the heat exchanger 24 reaches a low temperature around a normal temperature and is sucked into the compressor 7 that is provided downstream side of the heat exchanger 24. The normal-temperature compressed air sucked into the compressor 7 is adiabatically compressed in the second stage by the compressor 7, turning itself into higher-temperature higher-pressure compressed air. The compressed air discharged from the compressor 7 is introduced into the heat exchanger 25, where the compressed air exchanges heat with the heat storage medium at approximately 20°C supplied to the heat exchanger 25. The heat exchange makes the temperature of the heat storage medium reach approximately 100°C. The compressed air that has exchanged heat in the heat exchanger 25 reaches a low temperature close to a normal temperature and is stored in the pressure storage tank 8.

The heat storage medium flows from the heat exchanger 24 and 25 join each other, after which the combined heat storage medium flows into the heat radiator 34 of the heat pump unit 30. In the heat radiator 34, heat is radiated from the refrigerant into the heat storage medium by way of a heat exchange, increasing the temperature of the heat storage medium to approximately 120°C. The heat storage medium that has been heated to approximately 120°C is stored in the heat storage tank 21 on the high-temperature side.

### (Discharging operation)

In the discharging operation, the controller 40 supplies the low-temperature high-pressure compressed air stored in the pressure storage tank 8 to the heat exchanger 26, and drives the transfer pump 28 to supply the heat storage medium stored in the heat storage tank 21 on the high-temperature side to the heat exchangers 26 and 27. The temperature of the heat storage medium supplied to the heat exchangers 26 and 27 is slightly lower than 120°C due to heat dissipation while the heat storage medium is being stored in the heat storage tank 21.

In the heat exchanger 26, the temperature of the compressed air rises to approximately 100°C and the temperature of the heat storage medium drops to approximately 40°C by way of a heat exchange between the heat storage medium on the high-temperature side and the compressed air. The compressed air that has been heated to approximately 100°C by the heat exchanger 26 is sucked into the expander 10, where the expander 10 is driven by performing first-stage adiabatic expansion on the compressed air. The air that has been adiabatically expanded by the expander 10 is supplied to the heat exchanger 27, where the air is heated to approximately 100°C by way of a heat exchange with the heat storage medium. The air heated by the heat exchanger 27 is sucked into the expander 11, where second-stage adiabatic expansion is performed to drive the expander 11. The air that has been adiabatically expanded by the expander 11 becomes low in temperature and pressure and is discharged into the atmosphere from the outlet port of the expander 11. By driving the expanders 10 and 11 with the compressed air, electric power is generated by the electric generators 12 and 13. The generated electric power is supplied via the power conditioner 14 to the grid power system 3.

According to the first embodiment described above, water whose boiling point is 100°C is used as the heat storage medium, and the heat pump unit 30 transfers heat from the heat storage medium on the low-temperature side, which flows out of the heat exchangers 26 and 27, to the heat storage medium flowing into the heat exchangers 26 and 27, thereby heating the air supplied to the expanders 10 and 11 to a temperature of approximately 90°C. According to the fourth embodiment, on the other hand, a heat storage medium having a high boiling point such as pressurized water is used, and the heat pump unit 30 transfers heat from the heat storage medium on the low-temperature side to the heat storage medium on the high-temperature side, thereby storing the heat storage medium at a higher temperature (approximately 120°C) in the heat storage tank 21. The heat storage medium at the higher temperature (approximately 120°C) that is stored in the heat storage tank 21 is supplied to the heat exchangers 26 and 27 to thereby heat the compressed air supplied to the expanders 10 and 11 to a temperature of approximately 100°C.

Therefore, the temperature of the compressed air supplied to the expanders 10 and 11 can be made higher than the temperature in the configuration according to the first embodiment, resulting in enabling an increase in the electric power recovery efficiency. Moreover, since the temperature of the heat storage medium flowing into the heat exchangers 26 and 27 can be made higher, the period of time required to increase the temperature of the compressed air by way of a heat exchange can be shortened to increase the responsiveness to electric power demand fluctuations.

### (Fifth embodiment)

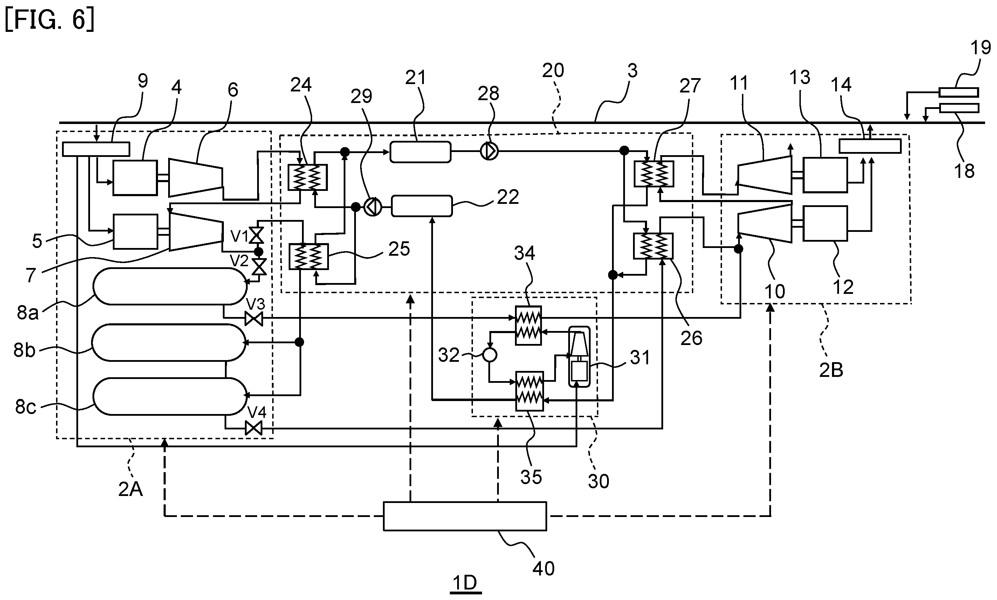

FIG. 6 is a diagram illustrating a general configuration of a compressed air energy storage apparatus (CAES apparatus) according to a fifth embodiment of the present invention. A CAES apparatus 1D illustrated in FIG. 6 has a compressor unit 2A having a different makeup and a heat pump unit 30 disposed in a different position as compared with the CAES apparatus 1 illustrated in FIG. 1. Other configurations are the same as those illustrated in FIG. 1, and similar components are denoted by identical reference characters and their redundant description will be omitted below.

In the CAES apparatus 1D illustrated in FIG. 6, the compressor unit 2A includes a plurality of pressure storage tanks 8a, 8b, and 8c and further includes on-off valves V1, V2, V3, and V4 for changing routes through which the compressed air flows. The outlet port of the second-stage compressor 7 is connected through the on-off valve V1 to the heat exchanger 25 and is connected through the on-off valve V2 to the pressure storage tank 8a that stores the high-temperature high-pressure compressed air. The pressure storage tank 8a has an outlet port connected to the inlet port of the expander 10 via the on-off valve V3 and the heat radiator 34 of the heat pump unit 30.

The heat exchanger 25 has a compressed-air outlet port connected to the pressure storage tank 8b and the pressure storage tank 8c that store the low-temperature high-pressure compressed air. The pressure storage tank 8b and the pressure storage tank 8c are held in fluid communication with each other through a pipe. The pressure storage tank 8c is connected to the inlet port of the expander 10 through the on-off valve V4 and the heat exchanger 26 of the expander unit 2B. Note that, since the pressure storage tank 8a that stores the high-temperature high-pressure compressed air is likely to have heat dissipated, the volume of the pressure storage tank 8a is smaller than the total volume of the pressure storage tanks 8b and 8c that store the low-temperature high-pressure compressed air.

The evaporator 35 of the heat pump unit 30 is provided in the heat storage medium route on the low-temperature side, through which the heat storage medium is returned from the heat exchangers 26 and 27 to the heat storage tank 22. The heat radiator 34 is provided in a route for the high-temperature high-pressure compressed air, through which the high-temperature high-pressure compressed air is supplied from the pressure storage tank 8a to the expander 10. In the heat pump unit 30, the evaporator 35 absorbs heat from the heat storage medium on the low-temperature side, and the heat radiator 34 radiates heat into the compressed air. Thereby, the high-temperature high-pressure compressed air supplied from the pressure storage tank 8a to the expander 10 is heated to a higher temperature by the heat radiator 34.

Next, a charging operation and a discharging operation of the CAES apparatus 1D will be described below. The heat storage medium may include water, pressurized water, mineral-oil-base medium, or glycol-base medium, for example. However, a case where water is used as the heat storage medium will be described below by way of example.

### (Charging operation)

In the charging operation, the controller 40 first opens the on-off valves V1 and V2. Incidentally, during an operation stop state of the CAES apparatus 1D, all of the on-off valves V1 through V4 are in a closed state. Then, the controller 40 controls the motors 4 and 5 to drive the compressors 6 and 7 and drive the transfer pump 29 to supply the heat storage medium stored in the heat storage tank 22 to the heat exchangers 24 and 25.

The high-temperature compressed air that has been adiabatically compressed by the compressor 6 is discharged from its outlet port and flows into the heat exchanger 24, where the compressed air exchanges heat with the heat storage medium at approximately 20°C supplied to the heat exchanger 24. The heat storage medium is heated to approximately 100°C by the heat exchange and then flows out of the heat exchanger 24. The compressed air that has exchanged heat in the heat exchanger 24 reaches a low temperature around a normal temperature and is sucked into the compressor 7 that is provided downstream of the heat exchanger 24. The normal-temperature compressed air sucked into the compressor 7 is adiabatically compressed in the second stage by the compressor 7, turning itself into higher-temperature higher-pressure compressed air.

The high-temperature high-pressure compressed air that has been discharged from the compressor 7 flows via the on-off valve V2 into the pressure storage tank 8a, and flows via the on-off valve V1 into the heat exchanger 25. Note that, since the temperature of the compressed air that has been adiabatically compressed in the second stage by the compressor 7 and discharged therefrom is approximately 130°C, the temperature of the compressed air stored in the pressure storage tank 8a is approximately 120°C. Moreover, the compressed air introduced into the heat exchanger 25 reaches an approximately normal temperature by way of a heat exchange with the heat storage medium at approximately 20°C and is stored in the pressure storage tanks 8b and 8c. The temperature of the heat storage medium flowing out of the heat exchanger 25 becomes approximately 100°C by way of a heat exchange with the compressed air. The heat storage medium that has flowed out of the heat exchanger 25 joins the heat storage medium that has flowed out of the heat exchanger 24, and the combined heat storage medium flows into and is stored in the heat storage tank 21.

Then, when the pressure in the pressure storage tank 8a has reached a preset prescribed pressure value, the on-off valve V2 is closed to put the storage of the compressed air into the pressure storage tank 8a to an end. As a result, all of the high-temperature high-pressure compressed air discharged from the compressor 7 flows through the on-off valve V1 into the heat exchanger 25. In the heat exchanger 25, heat is transferred from the high-temperature compressed air to the heat storage medium, whereupon the heat storage medium is heated to a temperature of approximately 100°C and the compressed air is cooled to a low temperature around a normal temperature. The low-temperature high-pressure compressed air flowing out of the heat exchanger 25 flows into and is stored in the pressure storage tank 8b and the pressure storage tank 8c. The heat storage medium at the high temperature (approximately 100°C) flowing out of the heat exchanger 25 joins the high-temperature heat storage medium that has flowed out of the heat exchanger 24, after which the combined heat storage medium flows into and is stored in the heat storage tank 21. When the pressures in the pressure storage tanks 8b and 8c have reached the prescribed pressure value, the controller 40 closes the on-off valve V1 and stops the transfer pump 28, whereupon the charging operation comes to an end.

### (Discharging operation)

Upon start of the discharging operation, the controller 40 operates the transfer pump 28 and the heat pump unit 30 and opens the on-off valve V3. When the transfer pump 28 operates, the high-temperature heat storage medium stored in the heat storage tank 21 is supplied to the heat exchangers 26 and 27. When the on-off valve V3 is opened, the compressed air at approximately 120°C stored in the pressure storage tank 8a is supplied through the heat radiator 34 of the heat pump unit 30 to the expander 10. The compressed air from the pressure storage tank 8a is heated to a higher temperature of approximately 150°C by way of a heat exchange with the high-temperature refrigerant in the heat radiator 34, and thereafter is supplied to the expander 10.

The compressed air at approximately 150°C that is supplied to the expander 10 is adiabatically expanded by the expander 10 and reduced in temperature. The compressed air at the reduced temperature is heated to approximately 70°C by the heat exchanger 27 and then supplied to the second-stage expander 11. The air that has been adiabatically expanded by the expander 11 becomes low in temperature and pressure and is vented to the atmosphere through the outlet port of the expander 11. The compressed air drives the expanders 10 and 11, enabling the electric generators 12 and 13 to generate electric power.

When the pressure in the pressure storage tank 8a has dropped below a pressure required for generating electric power, or when a predetermined warming time length has elapsed, the on-off valve V3 is closed, the on-off valve V4 is opened, and the heat pump unit 30 is stopped. Thus, the source of the compressed air is switched from the pressure storage tank 8a to the pressure storage tanks 8b and 8c. The low-temperature high-pressure compressed air stored in the pressure storage tanks 8b and 8c flows through the on-off valve V4 into the heat exchanger 26. Note that the volume of the pressure storage tank 8a is set to such a volume that the period of time consumed until the pressure therein drops below the pressure required for generating electric power is sufficiently longer than the predetermined warming time period.

The compressed air that has flowed into the heat exchanger 26 is heated to approximately 70°C by way of a heat exchange with the heat storage medium and is adiabatically expanded in the expander 10 to drive the expander 10. The air that has become lower in temperature by being adiabatically expanded in the expander 10 is heated again to a high temperature of approximately 70°C by way of a heat exchange with the high-temperature heat storage medium in the heat exchanger 27, and is supplied to the expander 11. The compressed air supplied to the expander 11 becomes low in temperature and pressure by performing second-stage adiabatic expansion in the expander 11, and is vented to the atmosphere from the outlet port of the expander 11.

The warming time referred to above will be described below. The heat exchangers 26 and 27 perform a heat exchange between the heat storage medium and the compressed air. On this occasion, since the heat exchangers 26 and 27 have not been sufficiently warmed immediately after being supplied with the heat storage medium, in a case of the supplied compressed air being low in temperature and pressure, the heat exchangers 26 and 27 are not able to heat the compressed air to a high temperature of approximately 70°C. Consequently, the expanders 10 and 11 cannot be rotated up to a prescribed rotational speed, and the electric generators 12 and 13 are unable to generate sufficient electric power. The time period consumed after the heat exchangers 26 and 27 start being supplied with the heat storage medium until the heat exchangers 26 and 27 are warmed enough to heat the compressed air to approximately 70°C will hereinafter be referred to a warming time or a warming period.

According to the present embodiment, the heat storage medium starts being supplied to the heat exchangers 26 and 27, and thereafter the source of the compressed air is switched to the pressure storage tanks 8b and 8c upon elapse of the warming time or a time longer than the warming time. Therefore, when the source of the compressed air is switched to the pressure storage tanks 8b and 8c, the generated electric power is prevented from being low due to insufficient warming of the heat exchangers 26 and 27.

Moreover, during the period until the on-off valve V4 becomes open from the start of the discharging operation including the warming period, the high-temperature high-pressure compressed air stored in the pressure storage tank 8a and heated to approximately 150°C by the heat radiator 34 is supplied to the expander 10. As a result, the expander 10 can quickly reach the "rotational speed at which the compressed air at approximately 150°C is supplied" upon start of the discharging operation. In other words, the responsiveness to electric power demand fluctuations can be increased. Furthermore, during the period of the discharging operation based on the compressed air stored in the pressure storage tank 8a, as the expander 10 is supplied with the compressed air at approximately 150°C, the electric power recovery efficiency can be increased as compared with the configuration illustrated in FIG. 2 in which configuration the expanders 10 and 11 are supplied with the compressed air at approximately 70°C.

In the charging operation described above, the on-off valves V1 and V2 are closed upon start of the charging operation, simultaneously starting to store the high-temperature high-pressure compressed air into the pressure storage tank 8a and to store the low-temperature high-pressure compressed air into the pressure storage tanks 8b and 8c. However, after storing the high-pressure compressed air into the pressure storage tank 8a by opening the on-off valve V2 at the same time the on-off valve V1 is closed, the on-off valve V1 may be opened and the on-off valve V2 may be closed to store the low-temperature compressed air into the pressure storage tanks 8b and 8c.

For example, for performing wind power generation leveling, it is necessary to perform several electric generation sessions per day due to changing in wind directions, and hence the operating time of each of the electric generation sessions is short. Therefore, the low-efficiency operation until a high startup temperature is reached tends to have adverse effects. In such a case, in the charging operation, at the same time the on-off valve V1 is closed, the on-off valve V2 may be opened to store the high-temperature compressed air in the pressure storage tank 8a, and the compressed air is stored in the pressure storage tank 8a until a prescribed pressure value is reached. Then, only the high-temperature high-pressure compressed air stored in the pressure storage tank 8a may be used to generate electric power in the subsequent repeated electric generation sessions. The CAES apparatus is thus effective when applied to the electric generation leveling in a grid power system where the electric power demand fluctuations are large and the supply ratio of wind power generation in relatively short periods is large. In a case of the solar power generation, on the other hand, since the discharging operation is as frequent as about once a day, either of the valve opening and closing patterns is applicable.

### (Sixth embodiment)

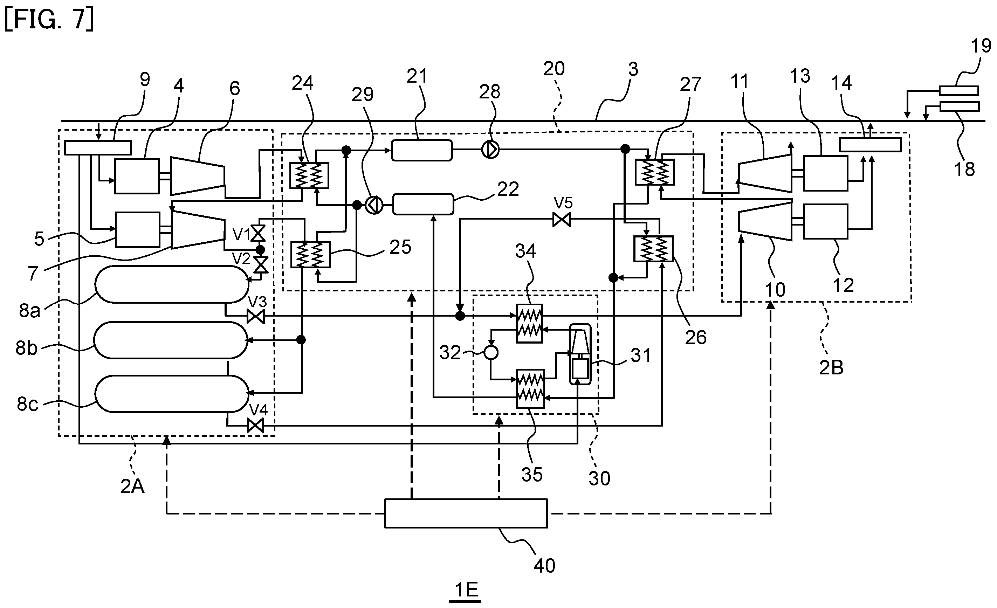

FIG. 7 is a diagram illustrating a general configuration of a compressed air energy storage apparatus (CAES apparatus) according to a sixth embodiment of the present invention. In a CAES apparatus 1E illustrated in FIG. 7, the pressure storage tanks 8b and 8c are connected through the on-off valve V4 to the heat exchanger 26. A compressed-air outlet side of the heat exchanger 26 is connected through an on-off valve V5 to a compressed-air supply line between the on-off valve V3 and the heat radiator 34. Other configurations are similar to those of the CAES apparatus 1D illustrated in FIG. 6.

As described above, in the CAES apparatus 1D illustrated in FIG. 6, the high-temperature high-pressure compressed air supplied from the pressure storage tank 8a to the expander 10 is heated by the heat radiator 34, so that the compressed air at a higher temperature is supplied to the expander 10. In the CAES apparatus 1E illustrated in FIG. 7, on the other hand, not only the high-temperature high-pressure compressed air supplied from the pressure storage tank 8a to the expander 10, but also the low-temperature high-pressure compressed air supplied from the pressure storage tanks 8b and 8c to the expander 10 is heated by the heat radiator 34 and then supplied to the expander 10. A charging operation of operation of the CAES apparatus 1E is the same as the charging operation of operation of the CAES apparatus 1D illustrated in FIG. 6. A discharging operation of operation of the CAES apparatus 1E will be described below.

### (Discharging operation)

Upon start of the discharging operation, the controller 40 operates the transfer pump 28 and the heat pump unit 30, opens the on-off valve V3 and at the same time closes the on-off valves V4 and V5. When the transfer pump 28 operates, it supplies the high-temperature heat storage medium stored in the heat storage tank 21 to the heat exchangers 26 and 27. When the on-off valve V3 is opened, the high-temperature high-pressure compressed air stored in the pressure storage tank 8a is supplied through the heat radiator 34 of the heat pump unit 30 to the expander 10. The high-temperature high-pressure compressed air from the pressure storage tank 8a is further increased in temperature by way of a heat exchange with the high-temperature refrigerant in the heat radiator 34 and thereafter is supplied to the expander 10. As a result, electric power is generated by the compressed air stored in the pressure storage tank 8a.

Then, when the pressure in the pressure storage tank 8a has dropped below a pressure required for generating electric power, or when a predetermined warming time has elapsed, the controller 40 closes the on-off valve V3 and opens the on-off valves V4 and V5. Thus, the source of the compressed air is switched from the pressure storage tank 8a to the pressure storage tanks 8b and 8c. The low-temperature high-pressure compressed air stored in the pressure storage tanks 8b and 8c flows through the on-off valve V4 into the heat exchanger 26. The compressed air that has flowed into the heat exchanger 26 is increased in temperature by way of a heat exchange with the heat storage medium, and thereafter flows through the on-off valve V5 into the heat radiator 34 of the heat pump unit 30. The compressed air from the pressure storage tanks 8b and 8c that has been increased in temperature by the heat exchanger 26 is further increased in temperature by way of a heat exchange with the high-temperature refrigerant in the heat radiator 34, and thereafter is supplied to the expander 10. As a result, electric power is generated by the compressed air stored in the pressure storage tanks 8b and 8c.

In the CAES apparatus 1E, as described above, not only the high-temperature high-pressure compressed air supplied from the pressure storage tank 8a to the expander 10 is heated by the heat radiator 34, but also the low-temperature high-pressure compressed air supplied from the pressure storage tanks 8b and 8c to the expander 10 is heated by the heat storage medium in the heat exchanger 26, and thereafter is further heated by the heat radiator 34. According to the present embodiment, as with the CAES apparatus 1D, when the source of the compressed air is switched to the pressure storage tanks 8b and 8c, the generated electric power is prevented from being low due to insufficient warming of the heat exchangers 26 and 27. Moreover, the expander 10 can quickly start up upon start of the discharging operation, so that the responsiveness to electric power demand fluctuations can be increased. Furthermore, the electric power recovery efficiency is increased not only during the period of the discharging operation based on the compressed air from the pressure storage tank 8a, but also during the period of the discharging operation based on the low-temperature high-pressure compressed air stored in the pressure storage tanks 8b and 8c.

### (Seventh embodiment)

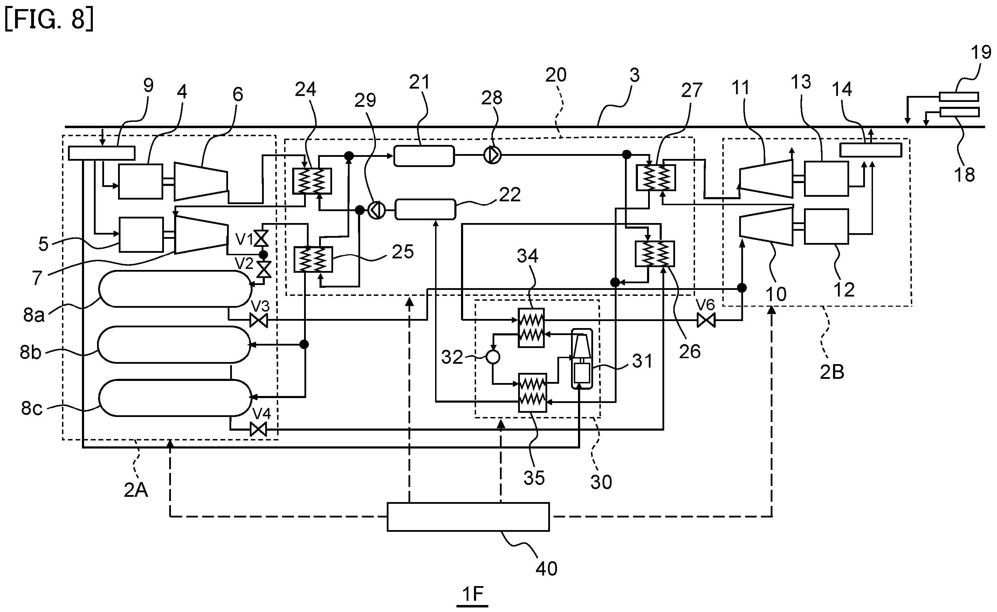

FIG. 8 is a diagram illustrating a general configuration of a compressed air energy storage apparatus (CAES apparatus) according to a seventh embodiment of the present invention. In a CAES apparatus 1F illustrated in FIG. 8, the pressure storage tank 8a is connected through the on-off valve V3 to the expander 10. The pressure storage tanks 8b and 8c are connected through the on-off valve V4 to the heat exchanger 26. A compressed-air outlet side of the heat exchanger 26 is connected to the heat radiator 34, whereas a compressed-air outlet side of the heat radiator 34 is connected through an on-off valve V6 to the expander 10. Other configurations are the same as those of the CAES apparatus 1D illustrated in FIG. 6.

As described above, in the CAES apparatus 1D illustrated in FIG. 6, the high-temperature high-pressure compressed air supplied from the pressure storage tank 8a to the expander 10 is heated by the heat radiator 34, so that the compressed air at a higher temperature is supplied to the expander 10. In the CAES apparatus 1F illustrated in FIG. 8, on the other hand, only the low-temperature high-pressure compressed air supplied from the pressure storage tanks 8b and 8c to the expander 10 is heated by the heat radiator 34 and then supplied to the expander 10. A charging operation of operation of the CAES apparatus 1F is the same as the charging operation of the CAES apparatus 1D illustrated in FIG. 6. A discharging operation of operation of the CAES apparatus 1F will be described below.

### (Discharging operation)

Upon start of the discharging operation, the controller 40 operates the transfer pump 28 and the heat pump unit 30, opens the on-off valve V3 and at the same time closes the on-off valves V4 and V6. When the transfer pump 28 operates, it supplies the high-temperature heat storage medium stored in the heat storage tank 21 to the heat exchangers 26 and 27. When the on-off valve V3 is opened, the high-temperature high-pressure compressed air stored in the pressure storage tank 8a is supplied to the expander 10. As a result, electric power is generated by the compressed air stored in the pressure storage tank 8a.

Then, when the pressure in the pressure storage tank 8a has dropped below a pressure required for generating electric power, or when a predetermined warming time has elapsed, the controller 40 closes the on-off valve V3 and opens the on-off valves V4 and V6. Thus, the source of the compressed air is switched from the pressure storage tank 8a to the pressure storage tanks 8b and 8c. The low-temperature high-pressure compressed air stored in the pressure storage tanks 8b and 8c flows through the on-off valve V4 into the heat exchanger 26. The compressed air that has flowed into the heat exchanger 26 has its temperature increased to a higher temperature by way of a heat exchange with the heat storage medium, and thereafter flows into the heat radiator 34 of the heat pump unit 30. The compressed air from the pressure storage tanks 8b and 8c that has been increased in temperature by the heat exchanger 26 is further increased in temperature by way of a heat exchange with the high-temperature refrigerant in the heat radiator 34, and thereafter is supplied through the on-off valve V6 to the expander 10. As a result, electric power is generated by the compressed air stored in the pressure storage tanks 8b and 8c.

As described above, in the CAES apparatus 1F, the low-temperature high-pressure compressed air supplied from the pressure storage tanks 8b and 8c to the expander 10 is heated by the heat storage medium in the heat exchanger 26, and thereafter is further heated by the heat radiator 34 and then supplied to the expander 10. Therefore, the electric power recovery efficiency can be increased during the period of the discharging operation using the low-temperature high-pressure compressed air stored in the pressure storage tanks 8b and 8c. Moreover, when the source of the compressed air is switched to the pressure storage tanks 8b and 8c, since the heat exchangers 26 and 27 have already been warmed up, the generated electric power is prevented from being low upon switching of the source of the compressed air. Furthermore, inasmuch as the high-temperature high-pressure compressed air stored in the pressure storage tank 8a is supplied to the expander 10 upon start of the discharging operation, the expander 10 can quickly start up upon start of the discharging operation, so that the responsiveness to electric power demand fluctuations can be increased.

### (Eighth embodiment)

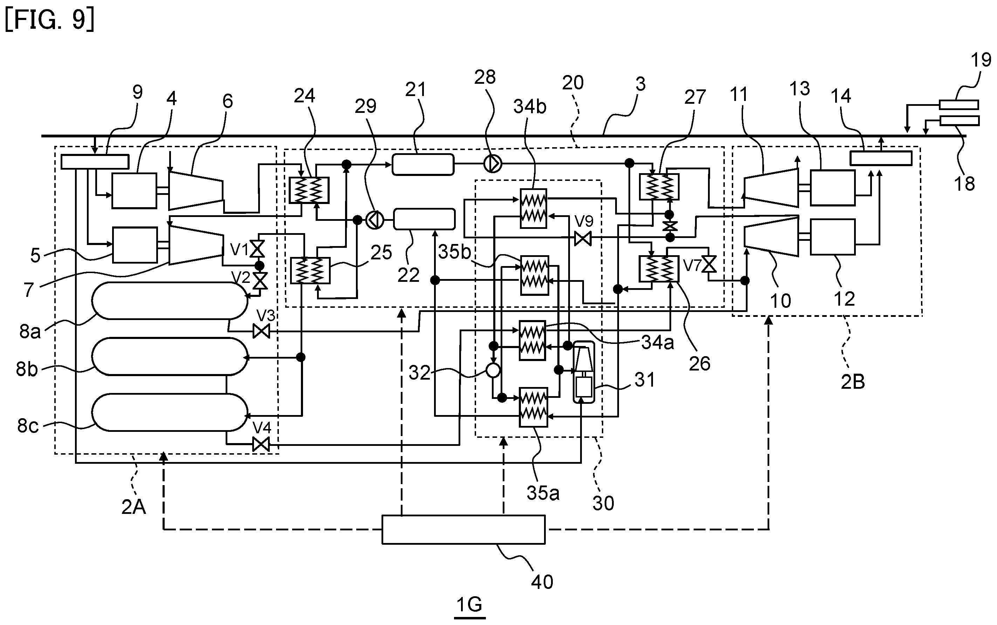

FIG. 9 is a diagram illustrating a general configuration of a compressed air energy storage apparatus (CAES apparatus) according to an eighth embodiment of the present invention. In a CAES apparatus 1G illustrated in FIG. 9, the pressure storage tank 8a is connected through the on-off valve V3 to the expander 10. The pressure storage tanks 8b and 8c are connected through the on-off valve V4 to the heat radiator 34a. A compressed-air outlet side of the heat radiator 34a is connected to the heat exchanger 26. A compressed-air outlet side of the heat exchanger 26 is connected through an on-off valve V7 to the expander 10. An outlet side of the expander 10 is connected through an on-off valve V8 to the heat exchanger 27 and also connected through an on-off valve V9 to the heat radiator 34b. A compressed-air outlet side of the heat radiator 34b is connected to the heat exchanger 27.

The refrigerant discharged from the refrigerant compressor 31 of the heat pump unit 30 is divided into refrigerant flows that flow into the respective heat radiators 34a and 34b. The refrigerant flows that have flowed out of the heat radiators 34a and 34b join each other, and the combined refrigerant flows into the expansion valve 32. The refrigerant that has been adiabatically expanded by the expansion valve 32 is divided into refrigerant flows that flow into respective evaporators 35a and 35b. The refrigerant flows that have flowed out of the evaporators 35a and 35b join each other, and the combined refrigerant goes back to the refrigerant compressor 31.

The heat storage medium in the heat storage tank 21 on the high-temperature side is supplied to the heat exchangers 26 and 27 by the transfer pump 28. The heat storage medium flows that have flowed out of the heat exchangers 26 and 27 join each other, and thereafter the combined heat storage medium flows into the evaporators 35a and 35b. The heat storage medium flows that have flowed out of the evaporators 35a and 35b join each other, and thereafter the combined heat storage medium flows back to the heat storage tank 22 on the low-temperature side. Other configurations are similar to those of the CAES apparatus 1D illustrated in FIG. **6****.** A charging operation of operation of the CAES apparatus 1G is the same as the charging operation of the CAES apparatus 1D illustrated in FIG. **6****. A** discharging operation of operation of the CAES apparatus 1G will be described below.

### (Discharging operation)

Upon start of the discharging operation, the controller 40 operates the transfer pump 28 and the heat pump unit 30, opens the on-off valves V3 and V8, and at the same time closes the on-off valves V4, V7, and V9. When the transfer pump 28 operates, it supplies the high-temperature heat storage medium stored in the heat storage tank 21 to the heat exchangers 26 and 27. The heat storage medium that flowed out of the heat exchangers 26 and 27 passes through the evaporators 35a and 35b and goes back to the heat storage tank 22. When the on-off valve V3 is opened, the high-temperature high-pressure compressed air stored in the pressure storage tank 8a is supplied to the expander 10. The air that has been adiabatically expanded by the expander 10 flows through the on-off valve V8 into the heat exchanger 27. The air that has been increased in temperature by the heat storage medium in the heat exchanger 27 is adiabatically expanded in the second stage by the expander 11 and vented to the atmosphere. As a result, electric power is generated by the compressed air stored in the pressure storage tank 8a.

Then, when the pressure in the pressure storage tank 8a has dropped below a pressure required for generating electric power, or when a predetermined warming time has elapsed, the controller 40 closes the on-off valves V3 and V8 and at the same time opens the on-off valves V4, V7, and V9. Thus, the source of the compressed air is switched from the pressure storage tank 8a to the pressure storage tanks 8b and 8c. The low-temperature high-pressure compressed air stored in the pressure storage tanks 8b and 8c flows through the on-off valve V4 into the heat radiator 34a. The compressed air is heated to a higher temperature by the heat radiator 34a and then flows into the heat exchanger 26. The compressed air is heated to a much higher temperature by the heat storage medium in the heat exchanger 26 and is supplied via the on-off valve V7 to the expander 10. The compressed air that has been adiabatically expanded by the expander 10 flows through the on-off valve V9 into the heat radiator 34b. The compressed air that has been heated to a higher temperature by the refrigerant in the heat radiator 34b flows into the heat exchanger 27, where the compressed air is heated to a much higher temperature by the heat storage medium. The compressed air that has flowed out of the heat exchanger 27 is supplied to the expander 11, where second-stage adiabatic expansion is performed on the compressed air. In this manner, electric power is generated by the compressed air stored in the pressure storage tanks 8b and 8c.

In the CAES apparatus 1G, since the high-temperature high-pressure compressed air stored in the pressure storage tank 8a is supplied to the expander 10 upon start of the discharging operation, the expander 10 can quickly start up upon start of the discharging operation, so that the responsiveness to electric power demand fluctuations can be increased. Moreover, when the source of the compressed air is switched to the pressure storage tanks 8b and 8c, since the heat exchangers 26 and 27 have already been warmed up, the generated electric power is prevented from being low upon switching of the source of the compressed air. Furthermore, for performing the discharging operation with the low-temperature high-pressure compressed air stored in the pressure storage tanks 8b and 8c, since the air heated by the heat radiator 34a is further heated by the heat exchanger 26 and supplied to the expander 10, and similarly, the air heated by the heat radiator 34b is further heated by the heat exchanger 27 and supplied to the expander 11, the electric power recovery efficiency can be increased.

### (Ninth embodiment)

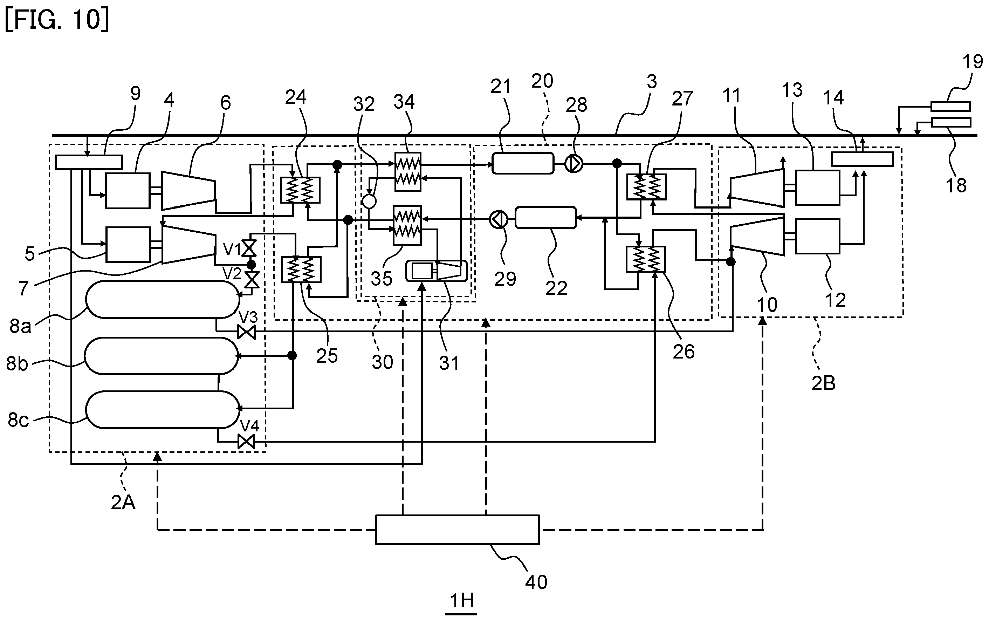

FIG. 10 is a diagram illustrating a general configuration of a compressed air energy storage apparatus (CAES apparatus) according to a ninth embodiment of the present invention. A CAES apparatus 1H illustrated in FIG. 10 is a modification of the CAES apparatus 1C illustrated in FIG. 5 where the heat pump unit 30 is used in the charging operation, into such a configuration that the CAES apparatus 1H includes a plurality of pressure storage tanks 8a, 8b, and 8c instead of the pressure storage tank 8. Moreover, the CAES apparatus 1H uses pressurized water, a mineral-oil-base heat storage medium or a glycol-base heat storage medium because the heat storage medium may occasionally have a high temperature equal to or higher than 100°C.

### (Charging operation)

In the charging operation, the controller 40 first opens the on-off valves V1 and V2. Then, the controller 40 drives the motors 4 and 5, the heat pump unit 30, and the transfer pump 29 with the electric power input from the grid power system 3, thereby enabling the compressor 6 and the compressor 7 to perform two-stage compression on the atmospheric air. Moreover, when the transfer pump 29 is driven, it supplies the heat storage medium at approximately 40°C store in the heat storage tank 22 on the low-temperature side through the evaporator 35 to the heat exchangers 24 and 25. The heat storage medium that has flowed out of the heat storage tank 22 has its heat absorbed by the refrigerant in the evaporator 35 of the heat pump unit 30, reducing its temperature from approximately 40°C to approximately 20°C. The heat storage medium at approximately 20°C that has flowed out of the evaporator 35 is divided into heat storage medium flows that flow into the respective heat exchangers 24 and 25.

The high-temperature compressed air that has been adiabatically compressed by the compressor 6 is discharged from its outlet port into the heat exchanger 24, where the compressed air exchanges heat with the heat storage medium at approximately 20°C supplied to the heat exchanger 24. The heat storage medium is caused to rise in temperature to approximately 100°C by the heat exchange and flows out of the heat exchanger 24. The compressed air that has exchanged heat in the heat exchanger 24 reaches a low temperature close to a normal temperature and is sucked into the compressor 7 that is provided downstream side of the heat exchanger 24. The normal-temperature compressed air sucked into the compressor 7 is adiabatically compressed in the second stage by the compressor 7, turning itself into higher-temperature higher-pressure compressed air.

The high-temperature high-pressure compressed air discharged from the compressor 7 is stored in the pressure storage tank 8a through the on-off valve V2, and flows through the on-off valve V1 and then the heat exchanger 25, after which the compressed air is stored in the pressure storage tanks 8b and 8c. Inasmuch as the temperature of the compressed air that has been adiabatically compressed in the second stage by the compressor 7 and discharged from the compressor 7 is approximately 130°C, the temperature of the compressed air stored in the pressure storage tank 8a is approximately 120°C. The compressed air introduced into the heat exchanger 25 reaches an approximately normal temperature due to a heat exchange with the heat storage medium at approximately 20°C and is stored in the pressure storage tanks 8b and 8c. The temperature of the heat storage medium that has flowed out of the heat exchanger 25 is approximately 100°C by way of a heat exchange with the compressed air.

The heat storage medium flows that have flowed out of the heat exchangers 24 and 25 join each other and thereafter flow into the heat radiator 34 of the heat pump unit 34. In the heat radiator 34, heat is radiated from the refrigerant into the heat storage medium by way of a heat exchange, increasing the temperature of the heat storage medium to approximately 120°C. The heat storage medium whose temperature has increased to approximately 120°C is stored in the heat storage tank 21 on the high-temperature side.

Then, when the pressure in the pressure storage tank 8a has reached a prescribed pressure value, the on-off valve V2 is closed to finish storing the compressed air into the pressure storage tank 8a. As a result, all of the high-temperature high-pressure compressed air discharged from the compressor 7 flows through the on-off valve V1 into the heat exchanger 25. In the heat exchanger 25, heat is transferred from the high-temperature compressed air to the heat storage medium, whereupon the heat storage medium is heated to a temperature of approximately 100°C and the compressed air is cooled to a low temperature around a normal temperature. The low-temperature high-pressure compressed air flowing out of the heat exchanger 25 flows into and is stored in the pressure storage tank 8b and the pressure storage tank 8c.

### (Discharging operation)

Upon start of the discharging operation, the controller 40 operates the transfer pump 28 and at the same time opens the on-off valve V3. When the transfer pump 28 operates, it supplies the high-temperature heat storage medium stored in the heat storage tank 21 to the heat exchangers 26 and 27. When the on-off valve V3 is opened, the compressed air at approximately 120°C stored in the pressure storage tank 8a is supplied through the heat radiator 34 of the heat pump unit 30 to the expander 10. The compressed air at approximately 120°C supplied to the expander 10 is adiabatically expanded by the expander 10 and has its temperature lowered. The compressed air at the reduced temperature is heated to approximately 100°C by the heat exchanger 27 and thereafter supplied to the expander 11 in the second stage. The air that has been adiabatically expanded by the expander 11 becomes low in temperature and pressure and is vented to the atmosphere through the outlet port of the expander 11. The expanders 10 and 11 are driven by the compressed air, enabling the electric generators 12 and 13 to generate electric power.

When the pressure in the pressure storage tank 8a has dropped below a pressure required for generating electric power, or when a predetermined warming time has elapsed, the on-off valve V3 is closed and the on-off valve V4 is opened, so that the source of the compressed air is switched from the pressure storage tank 8a to the pressure storage tanks 8b and 8c. The low-temperature low-pressure compressed air from the pressure storage tanks 8b and 8c flows through the on-off valve V4 into the heat exchanger 26. The compressed air that has flowed into the heat exchanger 26 is heated to approximately 70°C by way of a heat exchange with the heat storage medium and adiabatically expanded in the expander 10, thereby driving the expander 10. The air that has become lower in temperature by being adiabatically expanded in the expander 10 becomes high again in temperature up to approximately 70°C by way of a heat exchange with the high-temperature heat storage medium in the heat exchanger 27, and is then supplied to the expander 11. The compressed air supplied to the expander 11 becomes low in temperature and pressure by second-stage adiabatic expansion in the expander 11, and is vented to the atmosphere through the outlet port of the expander 11.

According to the present embodiment, as is the case with the CAES apparatus 1D illustrated in FIG. 6, the heat exchangers 26 and 27 start being supplied with the heat storage medium upon start of the charging operation, and thereafter the on-off valve V4 is opened to allow the source of the compressed air to switch to the pressure storage tanks 8b and 8c upon elapse of the warming time or a longer time than the warming time. Therefore, when the source of the compressed air is switched to the pressure storage tanks 8b and 8c, the generated electric power is prevented from being low due to insufficient warming of the heat exchangers 26 and 27.

Moreover, according to the present embodiment, as is the case with the CAES apparatus 1C illustrated in FIG. 5, a heat storage medium such as pressurized water having a high boiling point is used, and the heat pump unit 30 transfers heat from the heat storage medium on the low-temperature side to the heat storage medium on the high-temperature side, thereby storing the heat storage medium at a higher temperature (approximately 120°C) in the heat storage tank 21. The heat storage medium at the higher temperature (approximately 120°C) that is stored in the heat storage tank 21 is supplied to the heat exchangers 26 and 27 to thereby heat the air supplied to the expanders 10 and 11 to approximately 100°C which is higher than that with the first embodiment. As a result, the electric power recovery efficiency can be increased.

Moreover, during the period until the on-off valve V4 becomes open from the start of the discharging operation, which period includes the warming period, the high-temperature high-pressure compressed air stored in the pressure storage tank 8a is supplied to the expander 10. As a result, the expander 10 can quickly start up upon start of the discharging operation, so that the responsiveness to electric power demand fluctuations can be increased.

In each of the embodiments described above, the two-stage compression / two-stage expansion type based on the compressors 6 and 7 and the expanders 10 and 11 is incorporated in the CAES apparatus. However, a single-stage compression / single-stage expansion type, a compression/expansion type in three or more stages, or a combination of compression and expansion in which numbers of stages are different from each other is also applicable to the CAES apparatus. Moreover, although a single compressor and a single expander are used in each of the embodiments, the numbers of them are not limited to any particular values, and two or more compressors and expanders may be used. Furthermore, a combination of motor and compressor in which combination numbers of them are different from each other and a combination of electric generator and expander in which combination numbers of them are different from each other may be used. Furthermore, although the compressors 6 and 7 and the expanders 10 and 11 are separate equipment in each of the embodiments, a compressor and an expander (a motor and an electric generator) may share common equipment.

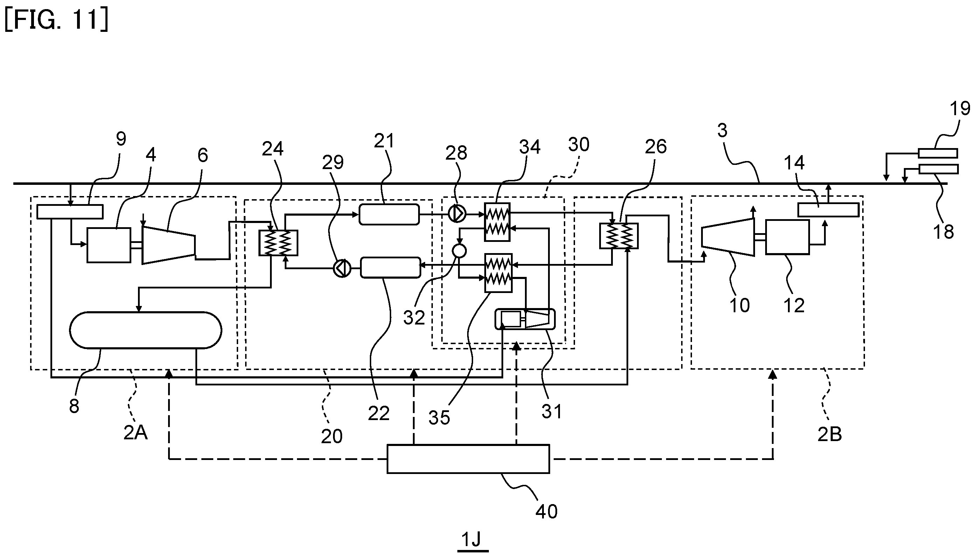

For example, a CAES apparatus 1J illustrated in FIG. 11 represents a modification of the second-stage CAES apparatus 1 illustrated in FIG. 1, in which modification the second-stage CAES apparatus 1 is modified into a single-stage configuration. In the charging operation, after the compressed air compressed in a single stage by the compressor 6 has exchanged heat with the heat storage medium in the heat exchanger 24, the compressed air is stored as low-temperature high-pressure compressed air into the pressure storage tank 8. The heat storage medium heated in the heat exchanger 24 is stored in the heat storage tank 21. In the discharge operation, the heat storage medium that has flowed out of the heat storage tank 21 is heated by the heat radiator 34 of the heat pump unit 30 and thereafter is supplied to the heat exchanger 26. The compressed air supplied from the pressure storage tank 8 to the expander 10 is heated by way of a heat exchange with the heat storage medium in the heat exchanger 26 and then is supplied to the expander 10.

The CAES apparatus 1J also incorporates the heat pump unit 30 that absorbs heat from the heat storage medium on the low-temperature side discharged from the heat exchanger 26 and radiates heat into the heat storage medium on the high-temperature side, which flows into the heat exchanger 26. Therefore, the compression heat stored in the heat storage medium can be recovered more efficiently and transferred to the compressed air before expansion, thereby making the compressed air supplied to the expander 10 higher in temperature. As a result, the electric power recovery efficiency can be increased and the responsiveness to electric power demand fluctuations can be made better.

The single-stage configuration (the motor 4, the compressor 6, and the heat exchanger 24) on the charging side and the single-stage configuration (the heat exchanger 26, the expander 10, and the electric generator 12) on the electricity generation side are also applicable to the CAES apparatuses illustrated in FIGS. 1 through 10.

The embodiments described above offer the following advantages:
(C1) As illustrated in FIG. 11, the compressed air energy storage apparatus (CAES apparatus) 1J includes the compressor 6 that is driven by the motor (electric motor) 4 and compresses air, the first heat exchanger 24 that heats the heat storage medium by way of a heat exchange with the compressed air compressed by the compressor 6, the pressure storage tank 8 that stores the compressed air having exchanged heat in the heat exchanger 24, the expander 10 driven by the compressed air stored in the pressure storage tank 8, the electric generator 12 driven by the expander 10, the heat exchanger (second heat exchanger) 26 for heating the compressed air flowing into the expander 10, by way of a heat exchange with heat storage medium heated by the heat exchanger (first heat exchanger) 24, and the heat pump unit (heat pump device) 30 that absorbs heat from the heat storage medium having exchanged heat in the heat exchanger 26 and radiates the heat into the compressed air that drives the expander 10.
(C2) In (C1) described above, as illustrated in FIGS. 1 and 11, the heat pump unit 30 may absorb heat from the heat storage medium having exchanged heat in the heat exchangers 26 and 27 and radiate heat into the heat storage medium supplied to the heat exchangers 26 and 27.

With respect to (C1) and (C2) described above, in the CAES apparatus 1J illustrated in FIG. 11, for example, the heat pump unit 30 is used to absorb heat from the heat storage medium on the low-temperature side, which is discharged from the heat exchanger 26 that increases the temperature of the compressed air, and to radiate heat into the heat storage medium on the high-temperature side, whose temperature has been increased by the heat exchanger 24 and that flows into the heat exchanger 26. In other words, the heat energy absorbed from the heat storage medium on the low-temperature is radiated into the compressed air that drives the expander 10, via the heat storage medium flowing into the heat exchanger 26. Therefore, the compression heat (heat energy) stored in the heat storage medium is recovered efficiently and transferred to the compressed air before expansion. As a result, the heat storage medium flowing into the heat exchanger 26 is made higher in temperature, making the compressed air supplied to the expander 10 higher in temperature. In other words, the electric power recovery efficiency can be increased and the responsiveness to electric power demand fluctuations can be made better.

(C3) In (C1) described above, as with the CAES apparatus 1A illustrated in FIG. 3, the heat pump unit 30 includes the evaporator (heat absorber) 35 and the heat radiators 34a and 34b through which the refrigerant circulates, the evaporator 35 absorbs heat from the heat storage medium having exchanged heat in the heat exchanger 26, and the heat radiators 34a and 34b radiate the heat energy absorbed by the evaporator 35 into the compressed air heated by the heat exchangers 26 and 27.

The compressed air whose temperature has been increased by the heat exchanger 26 is further increased in temperature by the heat radiator 34a and is then supplied to the expander 10, and the compressed air whose temperature has been increased by the heat exchanger 27 is further increased in temperature by the heat radiator 34b and is then supplied to the expander 11. In the CAES apparatus 1A illustrated in FIG. 3, therefore, the heat energy absorbed from the heat storage medium on the low-temperature side by the evaporator 35 is radiated into the compressed air whose temperature has been increased by the heat exchangers 26 and 27 by the heat radiators 34a and 34b. As a result, the compressed air that drives the expanders 10 and 11 is made much higher in temperature, so that the electric power recovery efficiency can be increased by an increase in the generated electric power. Moreover, since the temperature of the compressed air is further increased, the temperature of the compressed air before expansion rises quickly, resulting in an increase in the responsiveness to electric power demand fluctuations.

(C4) In (C3) described above, as with the CAES apparatus 1B illustrated in FIG. 4, the heat exchangers (26a and 27a) includes three-fluid heat exchangers 26a and 27a into which the heat storage medium whose temperature has been increased by the heat exchangers 24 and 25, the refrigerant flowing out of the heat radiators 34a and 34b, and the compressed air supplied to the expanders 10 and 11 flow. The heat storage medium having radiated heat into the compressed air in the heat radiators 34a and 34b is caused to flow into the three-fluid heat exchangers 26a and 27a so as to radiate heat into the compressed air in the heat radiators 34a and 34b. Consequently, the temperature of the refrigerant that returns to the expansion valve 32 of the heat pump unit 30 is lower as compared with the configuration illustrated in FIG. 3. Therefore, the temperature of the refrigerant after being adiabatically expanded is made much lower, allowing more heat to be absorbed (recovered) from the heat storage medium in the evaporator 35 to the refrigerant. As a result, the heat recovery efficiency of the heat pump unit 30 is increased to reduce its electric power consumption, leading to an increase in the electric power recovery efficiency of the CAES apparatus 1B.

(C5) In (C1) described above, as illustrated in FIG. 6, the CAES apparatus 1D further includes the pressure storage tank (auxiliary pressure storage tank) 8a, apart from the pressure storage tanks (main pressure storage tanks) 8b and 8b for storing the compressed air having exchanged heat in the heat exchangers (first heat exchangers) 24 and 25, the pressure storage tank 8a being connected to a compressed air inlet port side of the heat exchanger 25 and storing the compressed air compressed by the compressors 6 and 7, the heat exchangers (second heat exchangers) 26 and 27 heat the compressed air flowing from the pressure storage tanks 8b and 8c into the expanders 10 and 11, by way of the heat exchange with the heat storage medium heated by the heat exchangers 24 and 25, and the CAES apparatus 1D includes the controller 40 that drives the expanders 10 and 11 with the compressed air stored in the pressure storage tank 8a and starts to cause the heat storage medium heated by the heat exchangers 24 and 25 to flow into the heat exchangers 26 and 27, and thereafter, the controller 40 drives the expanders 10 and 11 with the compressed air stored in the pressure storage tanks 8b and 8c.

For example, in the CAES apparatuses 1D through 1G illustrated in FIGS. 6 through 9, the heat pump unit 30 absorbs heat from the heat storage medium having exchanged heat in the heat exchangers 26 and 27 and radiates heat, with the heat radiator 34, into the compressed air supplied to the expanders 10 and 11. In the CAES apparatuses 1D through 1G illustrated in FIG. 10, the heat pump unit 30 absorbs heat from the heat storage medium having exchanged heat in the heat exchangers 26 and 27 and radiates heat, with the heat radiator 34, into the heat storage medium supplied to the heat exchangers 26 and 27. In other words, the heat energy absorbed from the heat storage medium on the low-temperature side is radiated into the compressed air that drives the expanders 10 and 11, through the heat storage medium that flows into the heat exchangers 26 and 27.

As described above, the heat pump unit 30 absorbs heat from the heat storage medium having exchanged heat in the heat exchangers 26 and 27 and radiates heat into the compressed air that drives the expanders 10 and 11. Consequently, the temperature of the compressed air supplied to the expanders 10 and 11 is made higher than heretofore, resulting in a further increase in the electric power recovery efficiency and the responsiveness.

In addition, after the expanders 10 and 11 have been driven by the high-temperature high-pressure compressed air stored in the pressure storage tank 8a, the low-temperature high-pressure compressed air stored in the pressure storage tanks 8b and 8c takes over to drive the expanders 10 and 11. Therefore, the expanders 10 and 11 can quickly start up upon start of the discharging operation, so that the responsiveness to electric power demand fluctuations can be increased.

Moreover, at the same time that the expanders 10 and 11 are driven by the compressed air stored in the pressure storage tank 8a, the heat storage medium whose temperature has been increased by the heat exchanger 24 starts flowing into the heat exchangers 26 and 27, after which the expanders 10 and 11 are driven by the compressed air stored in the pressure storage tanks 8b and 8c. Therefore, when the source of the compressed air is switched from the pressure storage tank 8a to the pressure storage tanks 8b and 8c, the generated electric power can be prevented from being low due to insufficient warming of the heat exchangers 26 and 27.

(C6) In (C5) described above, the heat pump unit 30 absorbs heat from the heat storage medium having exchanged heat in the heat exchangers 26 and 27 and radiates heat into at least one of the compressed air flowing from the pressure storage tanks 8b and 8c into the expander 10 and the compressed air flowing from the pressure storage tank 8a into the expander 10. For example, in the CAES apparatus 1D illustrated in FIG. 6, the heat pump unit 30 radiates heat into the compressed air flowing from the pressure storage tank 8a into the expander 10. In the CAES apparatus 1E illustrated in FIG. 7, the heat pump unit 30 radiates heat into both the compressed air flowing from the pressure storage tank 8a into the expander 10 and the compressed air flowing from the pressure storage tanks 8b and 8c into the expander 10. In the CAES apparatuses 1F and 1G illustrated in FIGs. 8 and 9, the heat pump unit 30 radiates heat into the compressed air flowing from the pressure storage tanks 8b and 8c into the expander 10. Consequently, the temperature of the compressed air supplied to the expanders 10 and 11 is made higher than heretofore, resulting in a further increase in the electric power recovery efficiency and the responsiveness.

(C7) In (C6) described above, as with the CAES apparatus 1G illustrated in FIG. 9, the expanders 10 and 11 are configured as a multistage expander including the expander 10 in a first expansion stage and the expander 11 in a second expansion stage. The heat exchangers 26 and 27 are provided individually on the respective inlet sides of the expanders 10 and 11. The heat pump unit 30 absorbs heat from the heat storage medium having exchanged heat in the heat exchangers 26 and 27 and radiates heat into the compressed air flowing from the pressure storage tanks 8b and 8c into the expander 10 and the compressed air flowing from the expander 10 into the expander 11. Therefore, the amount of electric power generated by the electric generator 12 driven by the expander 10 and the amount of electric power generated by the electric generator 13 driven by the expander 11 are increased, resulting in an increase in the electric power recovery efficiency.

(C8) In (C5) described above, as with the CAES apparatus 1H illustrated in FIG. 10, the heat pump unit 30 absorbs heat from the heat storage medium having exchanged heat in the heat exchangers 26 and 27 and radiates heat into the heat storage medium supplied to the heat exchangers 26 and 27. Therefore, the heat energy absorbed from the heat storage medium having exchanged heat in the heat exchangers 26 and 27 is radiated into the compressed air supplied to the expanders 10 and 11 through the heat medium supplied to the heat exchangers 26 and 27. As a result, the temperature of the compressed air supplied to the expanders 10 and 11 is made higher than heretofore, resulting in a further increase in the electric power recovery efficiency and the responsiveness.

(C9) In (C1) described above, the heat pump unit 30 may be a heat pump device adopting a steam compression cycle that uses a refrigerant.

(C10) In (C1) described above, the heat storage medium includes pressurized water. Since the pressurized water has a high boiling point as compared with water that is not pressurized, the temperature of the heat storage medium can be increased to a higher level, so that the heat storage medium can heat the compressed air to a higher temperature, resulting in an increase in the electric power recovery efficiency.

(C11) As illustrated in FIG. 11, the heat pump unit 30 is a heat pump device for use in a compressed air energy storage apparatus that stores compressed air and compression heat obtained by compressing air with the compressor 6, heats the compressed air by way of a heat exchange, in the heat exchanger 26, between the compressed air and the heat storage medium that has absorbed the compression heat, and drives the expander 10 with the heated compressed air to generate electric power, the heat pump device including the evaporator 35 for absorbing heat from heat storage medium having exchanged heat in the heat exchanger 26 and the heat radiator 34 for radiating heat into the heat storage medium flowing into the heat exchanger 26. Therefore, the heat pump unit 30 is able to efficiently transfer the heat energy stored in the heat storage medium to the compressed air, thereby increasing the electric power recovery efficiency of the compressed air energy storage apparatus.

In each of the embodiments described above, regarding electricity generation utilizing renewable energy, all resources of energy may be possible, which resources of energy are steadily or repetitiously replenished and irregularly varied by power of nature and include wind power, solar power, solar heat, wave power or tidal power, running water or tide, geothermal energy, or the like. The electric power may be varied by other equipment that consumes high electric power in a factory. The grid power system that supplies the electric power may be not only a wide-area grid power system, but also a regional grid power system or an in-factory microgrid power system.

While the preferred embodiments of the present invention have been described in detail above, the embodiments represent only illustrative examples of the present invention and should not be construed as the specific configurations to which the scope of the invention is to be limited. For example, in each of the above embodiments, the heat pump unit 30 includes a heat pump device adopting a steam compression cycle that uses a refrigerant. However, the heat pump unit may include an absorptive heat pump device. It is also possible to combine the configurations of the different embodiments described above.

### Description of Reference Characters

1, 1A to 1H, 1J: Compressed air energy storage apparatus (CAES apparatus)
2A: Compressor unit
2B: Expander unit
3: Grid power system
4, 5: Motor (electric motor)
6, 7: Compressor
8, 8a, 8b, 8c: Pressure storage tank
9: Inverter device
10, 11: Expander
12, 13: Electric generator
14: Power conditioner
20: Heat storage unit
21, 22: Heat storage tank
24 to 27: Heat exchanger
26a, 27a: Three-fluid heat exchanger
28, 29: Transfer pump
30: Heat pump unit
31: Refrigerant compressor
32: Expansion valve
34, 34a, 34b: Heat radiator
35: Evaporator
40: Controller

## Claims

1. A compressed air energy storage apparatus comprising:
a compressor that is driven by an electric motor and compresses air;
a first heat exchanger that heats a heat storage medium by way of a heat exchange with compressed air compressed by the compressor;
a pressure storage tank that stores compressed air having exchanged heat in the first heat exchanger;
an expander driven by the compressed air stored in the pressure storage tank;
an electric generator driven by the expander;
a second heat exchanger for heating compressed air flowing into the expander, by way of a heat exchange with a heat storage medium heated by the first heat exchanger; and
a heat pump device that absorbs heat from a heat storage medium having exchanged heat in the second heat exchanger and radiates heat into compressed air that drives the expander.

2. The compressed air energy storage apparatus according to claim 1, wherein
the heat pump device absorbs heat from the heat storage medium having exchanged heat in the second heat exchanger and radiates heat into the heat storage medium supplied to the second heat exchanger.

3. The compressed air energy storage apparatus according to claim 1, wherein
the heat pump device includes a heat absorber and a heat radiator through which a refrigerant circulates,
the heat absorber absorbs heat from the heat storage medium having exchanged heat in the second heat exchanger, and
the heat radiator radiates heat energy absorbed by the heat absorber into the compressed air heated by the second heat exchanger.

4. The compressed air energy storage apparatus according to claim 3, wherein
the second heat exchanger includes a three-fluid heat exchanger into which the heat storage medium heated by the first heat exchanger, the refrigerant flowing out of the heat radiator, and the compressed air supplied to the expander flow.

5. The compressed air energy storage apparatus according to claim 1, wherein
the compressed air energy storage apparatus further includes an auxiliary pressure storage tank, apart from a main pressure storage tank as the pressure storage tank for storing the compressed air having exchanged heat in the first heat exchanger, the auxiliary pressure storage tank being connected to a compressed air inlet side of the first heat exchanger and storing the compressed air compressed by the compressor,
the second heat exchanger heats the compressed air flowing from the main pressure storage tank into the expander, by way of the heat exchange with the heat storage medium heated by the first heat exchanger, and
the compressed air energy storage apparatus includes a controller that drives the expander with the compressed air stored in the auxiliary pressure storage tank and starts to cause the heat storage medium heated by the first heat exchanger to flow into the second heat exchanger, and thereafter, the controller drives the expander with the compressed air stored in the main pressure storage tank.

6. The compressed air energy storage apparatus according to claim 5, wherein
the heat pump device
absorbs heat from the heat storage medium having exchanged heat in the second heat exchanger, and
radiates heat into at least one of the compressed air flowing from the main pressure storage tank into the expander and the compressed air flowing from the auxiliary pressure storage tank into the expander.

7. The compressed air energy storage apparatus according to claim 6, wherein
the expander is a multistage expander having a first expansion stage and a second expansion stage,
the second heat exchanger includes heat exchangers provided individually on respective inlet sides of the first expansion stage and the second expansion stage,
the heat pump device absorbs heat from the heat storage medium having exchanged heat in the second heat exchanger, and radiates heat into the compressed air flowing from the main pressure storage tank into the first expansion stage and the compressed air flowing from the first expansion stage into the second expansion stage.

8. The compressed air energy storage apparatus according to claim 5, wherein
the heat pump device
absorbs heat from the heat storage medium having exchanged heat in the second heat exchanger, and
radiates heat into the heat storage medium supplied to the second heat exchanger.

9. The compressed air energy storage apparatus according to claim 1, wherein
the heat pump device is a heat pump device adopting a steam compression cycle that uses a refrigerant.

10. The compressed air energy storage apparatus according to claim 1, wherein
the heat storage medium is pressurized water.

11. A heat pump device used in a compressed air energy storage apparatus that stores compressed air and compression heat obtained by compressing air with a compressor, heats the compressed air by way of a heat exchange, in a heat exchanger, between the compressed air and a heat storage medium that has absorbed the compression heat, and drives an expander with compressed air having heated to generate electric power, the heat pump device comprising:
an evaporator for absorbing heat from a heat storage medium having exchanged heat in the heat exchanger; and
a heat radiator for radiating heat into the heat storage medium flowing into the heat exchanger.
